# EUROPEAN PATENT SPECIFICATION

(11) **EP 3 785 925 B1**
(45) Date of publication and mention of the grant of the patent: **19.04.2023**
(21) Application number: 19793638.8
(22) Date of filing: 23.04.2019
(51) Int. Cl.: C09D 11/54, C09D 11/322, B41M 5/00, B41J 2/01, C09D 11/102, C09D 11/38, C09D 11/40

(54) **AQUEOUS COMPOSITION FOR INKJET RECORDING**
WÄSSRIGE ZUSAMMENSETZUNG FÜR TINTENSTRAHLAUFZEICHNUNG
COMPOSITION AQUEUSE POUR ENREGISTREMENT À JET D'ENCRE

(30) Priority: 24.04.2018 JP 2018083502
(43) Date of publication of application: 03.03.2021
(73) Proprietor: Kao Corporation, Chuo-ku, Tokyo 103-8210 (JP)
(72) Inventor: MAEDA, Takahiro, Wakayama 640-8580 (JP); FUKUDA, Teruyuki, Wakayama 640-8580 (JP); NAGANO, Tomohiko, Wakayama 640-8580 (JP)
(74) Representative: Hoffmann Eitle
(86) International application number: PCT/JP2019/017235
(87) International publication number: WO 2019/208567

(56) References cited:
- WO-A1-2018/221674
- JP-A- 2003 268 278
- JP-A- 2010 156 089
- JP-A- 2013 221 141
- JP-A- 2017 149 812
- JP-A- 2019 104 167
- US-A1- 2009 233 064

## Description

### FIELD OF THE INVENTION

The present invention relates to an aqueous composition for ink-jet printing, a coating liquid for ink-jet printing, an ink set for ink-jet printing and an ink-jet printing method.

### BACKGROUND OF THE INVENTION

From the viewpoint of improving water resistance and weathering resistance of a printed material, there has been proposed an ink using a pigment as a colorant. However, when printing characters or images on a low-ink absorbing printing medium such as a coated paper or a resin film, etc., pigment particles tend to remain on a surface of the printing medium after the printing. For this reason, when any stimulus is applied to a surface of the printed material, the pigment particles are likely to be peeled off from the printing medium, so that the printed material using the pigment tends to be deteriorated in image fastness as compared to a printed material using a dye as a colorant of the ink which is inhibited from remaining in the form of particles on the surface of the printing medium. In consequence, in order to improve image fastness of the printed material obtained using the pigment ink, there has been developed an aqueous composition such as a coating liquid, etc., which may be used in combination with the pigment ink.

For example, JP 2017-149812A (Patent Literature 1) aims at improving fastness of a pigment ink such as fastness to friction, fastness to laundering, etc., without deterioration in ejection reliability, and discloses an overcoating liquid for ink-jet textile printing which contains a water-dispersible resin, a water-soluble organic solvent containing a plurality of hydroxy groups in a molecular structure thereof, a crosslinking component and water, in which a blocked isocyanate compound or a carbodiimide compound is contained as the crosslinking component.

In addition, WO 2011/051711A (Patent Literature 2) discloses a method of printing images on a substrate which includes the step of applying an ink containing polymer-enclosing pigment particles and an aqueous medium to the substrate by an ink-jet printer, and the step of crosslinking the polymer-enclosing pigment particles with a second crosslinking agent, in which the first contact between the ink and the second crosslinking agent is conducted in air or on the substrate when the ink and the second crosslinking agent are ejected through respective different nozzles from each other onto the substrate. In the Patent Literature 2, it is also described that the second crosslinking agent is a compound containing two or more groups selected from the group consisting of a carbodiimide group, an oxazoline group, an isocyanate group and the like.

### SUMMARY OF THE INVENTION

The present invention relates to an aqueous composition for ink-jet printing, containing a blocked isocyanate A, at least one compound B selected from the group consisting of a carbodiimide compound and an oxazoline compound, and water, and is characterized in that the mass ratio of the blocked isocyanate A to the compound B (A/B) is not less than 3 and not more than 15.

### DETAILED DESCRIPTION OF THE INVENTION

As described in the Patent Literatures 1 and 2, there have been conventionally used crosslinking agents such as a blocked isocyanate compound, a carbodiimide compound, an oxazoline compound, etc. However, more specifically, in these Patent Literatures, the respective crosslinking agents used therein contain merely a single kind of compound, and there is no description concerning a coating liquid containing a plurality of crosslinking agents, i.e., there have been conventionally made no studies concerning the use of such a coating liquid containing a plurality of crosslinking agents. In addition, there has been caused such a problem that the coating liquid containing a plurality of crosslinking agents is deteriorated in storage stability depending upon the kinds of crosslinking agents.

Meanwhile, the ink-jet printing method is more suitable for production of a small number but many kinds of printed materials than analog printing methods such as a gravure printing method, etc., and therefore it has been demanded to apply the ink-jet printing method to a still wider range of printing media. With the increase in kinds of printing media to which the ink-jet printing method is applied, in the commercial or industrial printing application fields using printing media such as a coated paper or a resin film, it has been required that the resulting printed material is further improved, in particular, in image fastness, for example, rub fastness, solvent resistance and adhesion properties to a substrate such as a resin film, etc., (hereinafter also refer to merely as "substrate adhesion properties").

In addition, as a packaging substrate for containers used, for example, in food or medical application fields, such as a PET bottle and a plastic case, there have been widely used heat-shrinkable resin films. Such a packaging substrate can be used for printing not only package designs, but also important information including product information such as statements of efficacy, usage, best-before date, lot number, etc., thereon. For this reason, it has also been required that even those printed materials using the heat-shrinkable resin films are improved in rub fastness, solvent resistance and substrate adhesion properties.

The present invention is capable of providing an aqueous composition for ink-jet printing which is excellent in storage stability. In addition, the present invention relates to an aqueous composition for ink-jet printing which is capable of providing a printed material that is excellent in rub fastness, solvent resistance and substrate adhesion properties by incorporating a resin into the aqueous composition or using the aqueous composition in combination with a water-based ink containing the resin, a coating liquid for ink-jet printing which contains the aqueous composition, an ink set for ink-jet printing which contains the aqueous composition and the water-based ink, and an ink-jet printing method using the aqueous composition and the water-based ink.

Meanwhile, the term "low-water absorbing" as used in the present specification is a concept that is intended to include both of low-water absorbing properties and non-water absorbing properties, and it means that a water absorption of the printing medium is not less than 0 g/m² and not more than 10 g/m² as measured under such a condition that a contact time between the printing medium and pure water is 100 milliseconds. The water absorption may be measured by the method described in Examples below.

Also, the term "printing" as used in the present specification means a concept that includes printing or typing operation for printing characters or images, and the term "printed material" as used in the present specification means a concept that includes printed matters or typed materials on which characters or images are printed.

The present inventors have found that by using a blocked isocyanate in combination with at least one compound selected from the group consisting of a carbodiimide compound and an oxazoline compound, it is possible to obtain an aqueous composition that is excellent in storage stability, and further by using the aqueous composition in combination with a water-based ink, it is possible to obtain a printed material that can be improved in rub fastness, solvent resistance and substrate adhesion properties.

That is, the present invention relates to the following aspects [1] to [6].
[1] An aqueous composition for ink-jet printing, containing a blocked isocyanate A, at least one compound B selected from the group consisting of a carbodiimide compound and an oxazoline compound, and water, characterized in that the mass ratio of the blocked isocyanate A to the compound B (A/B) is not less than 3 and not more than 15.
[2] A coating liquid for ink-jet printing, containing the aqueous composition for ink-jet printing according to the above aspect [1],
[3] An ink set for ink-jet printing, containing the aqueous composition for ink-jet printing according to the above aspect [1], and a water-based ink containing a pigment,
   in which at least one of the aqueous composition for ink-jet printing and the water-based ink contains a resin containing a reactive group that is capable of undergoing a crosslinking reaction at least with the compound B.
[4] An ink-jet printing method using the aqueous composition for ink-jet printing according to the above aspect [1], and a water-based ink containing a pigment, in which at least one of the aqueous composition for ink-jet printing and the water-based ink contains a resin containing a reactive group that is capable of undergoing a crosslinking reaction at least with the compound B,
   said ink-jet printing method including the following steps 1 and 2:
   Step 1: ejecting the aqueous composition for ink-jet printing and the water-based ink onto a surface of a printing medium by an ink-jetting method to print characters or images thereon; and
   Step 2: subjecting the blocked isocyanate A, the compound B and the resin which are present in the characters or images printed in the step 1 to crosslinking reaction.
[5] A use of the aqueous composition for ink-jet printing according to aspect [1] as a composition for improving fixing properties of an ink for ink-jet printing.
[6] A use of the ink set for ink-jet printing according to aspect [3] for ink-jet printing.

In accordance with the present invention, it is possible to provide an aqueous composition for ink-jet printing which is excellent in storage stability, and it is further possible to provide an aqueous composition for ink-jet printing which is capable of providing a printed material that is excellent in rub fastness, solvent resistance and substrate adhesion properties by incorporating a resin into the aqueous composition or using the aqueous composition in combination with a water-based ink containing the resin, a coating liquid for ink-jet printing which contains the aqueous composition, an ink set containing the aqueous composition and the water-based ink, and an ink-jet printing method using the aqueous composition and the water-based ink.

### [Aqueous Composition for Ink-Jet Printing]

The aqueous composition for ink-jet printing according to the present invention (hereinafter also referred to merely as an "aqueous composition") contains a blocked isocyanate A (hereinafter also referred to merely as an "isocyanate A"), at least one compound B selected from the group consisting of a carbodiimide compound and an oxazoline compound (hereinafter also referred to merely as a "compound B"), and water, and is characterized in that the mass ratio of the blocked isocyanate A to the compound B (A/B) is not less than 3 and not more than 15.

Meanwhile, the term "aqueous" as used in the present invention means that water has a largest content among components of a medium contained in the aqueous composition.

In addition, the term "blocked isocyanate" as used in the present invention means a polyisocyanate compound whose isocyanate groups are blocked with a blocking agent.

The aqueous composition of the present invention is excellent in storage stability, and is also capable of providing a printed material that is excellent in rub fastness, solvent resistance and substrate adhesion properties when used in combination with an ink. The reason why the aforementioned advantageous effects can be attained by the present invention is considered as follows though it is not clearly determined yet.

That is, in the present invention, it is considered that even though the blocked isocyanate is used in combination with the at least one compound selected from the group consisting of a carbodiimide compound and an oxazoline compound, the reaction between the respective compounds in the aqueous system using these compounds in combination with each other tends to hardly occur irrespective of whether or not the kinds of compounds are identical to or different from each other. Moreover, it is considered that since these compounds are well dissolved or dispersed in water, the resulting aqueous composition is excellent in storage stability.

Also, in general, upon conducting the ink-jet printing, after the ink is impacted onto a surface of a non-water absorbing printing medium such as a resin film, the pigment particles contained in the ink tend to remain adhered onto a surface of the printing medium without penetrating into the printing medium. In the present invention, the aqueous composition is brought into contact with the ink, so that the blocked isocyanate, the at least one compound selected from the group consisting of a carbodiimide compound and an oxazoline compound and the resin contained in the aqueous composition or the water-based ink are subjected to crosslinking reaction with each other. The blocked isocyanate is regenerated into an active isocyanate by dissociation of a blocking agent therefrom, and therefore exhibits high reactivity with the active hydrogen-containing compound. It is considered that when heating the printed characters or images formed by the aqueous composition and the ink, the carbodiimide compound or the oxazoline compound is reacted with the reactive group of the resin contained in the aqueous composition or the ink in association of evaporation of water therefrom to thereby form a crosslinked structure therebetween. On the other hand, it is also considered that with the progress of the heating, the dissociation of the blocking agent from the blocked isocyanate is allowed to proceed, and the regenerated active isocyanate forms a self-crosslinked structure between molecules thereof which is similar to an interpenetrating polymer network (IPN), so that a coating film of the ink having a firm crosslinked structure is formed on the printing medium. Thus, it is estimated that the different two kinds of crosslinking mechanisms serve for fixing the pigment particles onto the printing medium, so that the resulting printed material is improved in rub fastness, solvent resistance and substrate adhesion properties.

### <Blocked Isocyanate A>

The isocyanate A is formed by blocking isocyanate groups of the polyisocyanate compound with the blocking agent. Since the isocyanate groups having high reactivity are blocked with the blocking agent to stabilize the isocyanate groups, it is possible to not only improve storage stability of the aqueous composition, but also form a firm coating film of the ink after the crosslinking reaction.

The polyisocyanate compound is a compound containing two or more isocyanate groups in a molecule thereof. Examples of the polyisocyanate compound include an aliphatic isocyanate, an alicyclic isocyanate, an aromatic aliphatic isocyanate, an aromatic isocyanate, etc., and modified products of these compounds. Examples of the modified products of the polyisocyanate compound include multimers such as an isocyanurate, etc.; biuret compounds; adducts of the polyisocyanate compound with a polyhydric alcohol such as trimethylolpropane and pentaerythritol.

The aliphatic isocyanate is preferably a diisocyanate containing a linear or branched aliphatic hydrocarbon group between two isocyanate groups thereof. The number of carbon atoms of the aliphatic hydrocarbon group is preferably not less than 2 and more preferably not less than 3, and is also preferably not more than 10, more preferably not more than 9 and even more preferably not more than 8. Specific examples of the aliphatic isocyanate include tetramethylene diisocyanate, pentamethylene diisocyanate, hexamethylene diisocyanate (HDI), heptamethylene diisocyanate, octamethylene diisocyanate, decamethylene diisocyanate, dodecamethylene diisocyanate, 2,2,4- or 2,4,4-trimethylhexamethylene diisocyanate and the like.

Examples of the alicyclic isocyanate include hydrogenated xylylene diisocyanate (H6XDI), 1,4-cyclohexane diisocyanate, 4,4'-dicyclohexylmethane diisocyanate (H12MDI), isophorone diisocyanate (IPDI), 2,5- or 2,6-norbornane diisocyanate and the like.

Examples of the aromatic aliphatic isocyanate include *m-* or *p*-xylylene diisocyanate (XDI), tetramethyl xylylene diisocyanate (TMXDI) and the like.

Examples of the aromatic isocyanate include 1,3- or 1,4-phenylene diisocyanate, 2,4- or 2,6-tolylene diisocyanate (TDI), 4,4'- or 2,4'-diphenylmethane diisocyanate (MDI), *m-* or *p*-isocyanato-phenyl sulfonyl isocyanate, 4,4'-diisocyanatobiphenyl, 4,4'-diisocyanato-3,3'-dimethyl biphenyl, 1,5-naphthylene diisocyanate, 2,6-dimethyl benzene-1,4-diisocyanate and the like.

Among these compounds, from the viewpoint of improving storage stability of the aqueous composition, rub fastness, solvent resistance and substrate adhesion properties of the resulting printed material, preferred is at least one compound selected from the group consisting of an aliphatic diisocyanate, an alicyclic diisocyanate and modified products of these compounds; more preferred is at least one compound selected from the group consisting of hexamethylene diisocyanate (HDI), isophorone diisocyanate (IPDI), hydrogenated xylylene diisocyanate (H6XDI), 4,4'-dicyclohexylmethane diisocyanate (H12MDI) and modified products of these compounds; even more preferred are hexamethylene diisocyanate (HDI) and modified products thereof and further even more preferred is a trimer of HDI containing an isocyanurate ring.

Examples of the blocking agent include amines such as 3,5-dimethyl pyrazole (DMP), 1,2,4-triazole, diisopropyl amine, etc.; phenols such as phenol, cresol, etc.; oximes such as methyl ethyl ketoxime, etc.; lactams such as ε-caprolactam, etc.; and active hydrogen-containing compounds, e.g., active methylene compounds such as diethyl malonate, ethyl acetoacetate, etc. Among these blocking agents, from the viewpoint of improving rub fastness, solvent resistance and substrate adhesion properties of the aqueous composition, preferred is 3,5-dimethyl pyrazole.

The dissociation temperature of the isocyanate A is preferably not lower than 100°C and more preferably not lower than 110°C from the viewpoint of improving rub fastness, solvent resistance and substrate adhesion properties of the resulting printed material, and is also preferably not higher than 200°C, more preferably not higher than 180°C, even more preferably not higher than 160°C, further even more preferably not higher than 140°C and still further even more preferably not higher than 130°C from the viewpoint of suppressing damage to the printing medium such as deformation thereof, etc.

The isocyanate group equivalent of the isocyanate A is preferably not less than 300, more preferably not less than 500 and even more preferably not less than 700, and is also preferably not more than 4,000, more preferably not more than 3,000, even more preferably not more than 2,000, further even more preferably not more than 1,500 and still further even more preferably not more than 1,200, from the viewpoint of improving storage stability of the aqueous composition, rub fastness, solvent resistance and substrate adhesion properties of the resulting printed material. Incidentally, the isocyanate group equivalent of the isocyanate A as used herein means a mass of the isocyanate A per 1 mol of the isocyanate group.

Examples of commercially available products of the isocyanate A include Trixene blocked isocyanates "Aqua BI 200", "Aqua BI 220", "BI 7950", "BI 7951", "BI 7960", "BI 7961", "BI 7982", "BI 7990", "BI 7991" and "BI 7992" (tradenames) all available from Baxenden Chemicals Ltd.; "DM-6400", "MEIKANATE DM-3031CONC", "MEIKANATE DM-35HC", "MEIKANATE TP-10", "MEIKANATE CX", "SU-268A", "NBP-873D" and "NBP-211" (tradenames) all available from Meisei Chemical Works, Ltd.; "ELASTRON BN-69", "ELASTRON BN-77", "ELASTRON BN-27" and "ELASTRON BN-11" (tradenames) all available from DKS Co., Ltd.; "TAKENATE WB-700", "TAKENATE WB-770" and "TAKENATE WB-920" (tradenames) all available from Mitsui Chemicals Polyurethanes, Inc.; "DURANATE MF-K60B", "DURANATE SBN-70D", "DURANATE MF-B60B", "DURANATE MF-B90B", "DURANATE 17B-60P", "DURANATE TPA-B80B", "DURANATE TPA-B80E" and "DURANATE E402-B80B" (tradenames) all available from Asahi Kasei Corporation; "FIXER N" available from Matsui Shikiso Chemical Co., Ltd.; and the like.

### <Compound B>

The aqueous composition of the present invention contains at least one compound B selected from the group consisting of a carbodiimide compound and an oxazoline compound. By using the isocyanate A in combination with the compound B, it is possible to hot only improve storage stability of the aqueous composition, but also form a firm coating film of the ink after the crosslinking reaction.

### (Carbodiimide Compound)

The carbodiimide compound is preferably a polycarbodiimide compound containing two or more carbodiimide groups in a molecule thereof from the viewpoint of improving storage stability of the aqueous composition, rub fastness, solvent resistance and substrate adhesion properties of the resulting printed material. The polycarbodiimide compound is preferably a polymer containing two or more carbodiimide groups (hereinafter also referred to merely as a "carbodiimide group-containing polymer").

The carbodiimide group-containing polymer is preferably produced, for example, by end-capping isocyanate end groups of a condensation reaction product obtained by subjecting diisocyanates to decarbonation condensation reaction in the presence of a carbodiimidation catalyst, with a hydrophilic group.

Examples of the diisocyanates used in the decarbonation condensation reaction include aliphatic diisocyanates such as hexamethylene diisocyanate (HDI), decamethylene diisocyanate, 2,4,4-trimethylhexamethylene diisocyanate, etc.; alicyclic diisocyanates such as 4,4'-dicyclohexylmethane diisocyanate (H12MDI), isophorone diisocyanate (IPDI), 2,5- or 2,6-norbornane diisocyanate, hydrogenated xylylene diisocyanate (H6XDI), hydrogenated tolylene diisocyanate, 2,4-bis-(8-isocyanatooctyl)-1,3-dioctylcyclobutane (OCDI). etc.; aromatic aliphatic diisocyanates such as *m-* or *p*-xylylene diisocyanate (XDI), tetramethyl xylylene diisocyanate (TMXDI), etc.; aromatic diisocyanates such as 2,4,6-triisopropyl phenyl diisocyanate (TIDI), 4,4'- or 2',4-diphenylmethane diisocyanate (MDI), 2,4- or 2,6-tolylene diisocyanate (TDI), etc.; and the like.

The compound used for end-capping the isocyanate end groups of the condensation reaction product is a compound containing a functional group that is capable of reacting with the isocyanate groups. Examples of such a compound include polyethylene glycol monomethyl ether, polypropylene glycol monomethyl ether and the like. Among these compounds, from the viewpoint of improving compounding ability of the carbodiimide group-containing polymer in the aqueous composition and storage stability of the aqueous composition, preferred is polyethylene glycol monomethyl ether. By controlling the molar number of addition of ethyleneoxide to the polyethylene glycol monomethyl ether, the resulting carbodiimide group-containing polymer can be compounded in the form of an emulsion or an aqueous solution in the aqueous composition.

The carbodiimide group equivalent of the carbodiimide group-containing polymer is preferably not less than 200 and more preferably not less than 300 from the viewpoint of improving rub fastness, solvent resistance and substrate adhesion properties of the resulting printed material, and is also preferably not more than 650, more preferably not more than 500 and even more preferably not more than 400 from the viewpoint of improving storage stability of the aqueous composition. Incidentally, the carbodiimide group equivalent of the carbodiimide group-containing polymer as used herein means a mass of the carbodiimide group-containing polymer per 1 mol of the carbodiimide group.

From the viewpoint of improving storage stability of the aqueous composition, rub fastness, solvent resistance and substrate adhesion properties of the resulting printed material, the carbodiimide compound is preferably compounded in the form of an aqueous solution or an emulsion thereof in the aqueous composition. Also, from the viewpoint of improving storage stability of the aqueous composition, the carbodiimide compound is preferably compounded in the form of an aqueous solution thereof in the aqueous composition.

Examples of commercially available products of the carbodiimide group-containing polymer include "CARBODILITE E-02", "CARBODILITE E-03A", "CARBODILITE E-05", "CARBODILITE V-02", "CARBODILITE V-02-L2" and "CARBODILITE V-04" (tradenames) all available from Nisshinbo Chemical Inc., and the like

### (Oxazoline Compound)

The oxazoline compound is preferably a polyoxazoline compound containing two or more oxazoline groups in a molecule thereof from the viewpoint of improving storage stability of the aqueous composition, rub fastness, solvent resistance and substrate adhesion properties of the resulting printed material. The polyoxazoline compound is preferably a polymer containing oxazoline groups (hereinafter also referred to merely as an "oxazoline group-containing polymer").

The number-average molecular weight of the oxazoline group-containing polymer is preferably not less than 1,000, more preferably not less than 5,000 and even more preferably not less than 10,000, and is also preferably not more than 1,000,000, more preferably not more than 500,000, even more preferably not more than 100,000 and further even more preferably not more than 50,000, from the viewpoint of enhancing reactivity of the oxazoline group-containing polymer.

As the oxazoline group-containing polymer, there may be used a polymer whose main chain has an acrylic skeleton, a polymer whose main chain has a styrene-acrylic skeleton, a polymer whose main chain has a styrene skeleton, a polymer whose main chain has an acrylonitrile-styrene skeleton, and the like.

The oxazoline group equivalent of the oxazoline group-containing polymer is preferably not less than 120 and more preferably not less than 160, and is also preferably not more than 800, more preferably not more than 600 and even more preferably not more than 300, from the viewpoint of improving storage stability of the aqueous composition, rub fastness, solvent resistance and substrate adhesion properties of the resulting printed material. Incidentally, the oxazoline group equivalent of of the oxazoline group-containing polymer as used herein means a mass of the oxazoline group-containing polymer per 1 mol of the oxazoline group.

Examples of commercially available products of the oxazoline group-containing polymer include "EPOCROSS WS" series products (water-soluble type) such as "EPOCROSS WS-300", "EPOCROSS WS-500", "EPOCROSS WS-700", etc., all available from Nippon Shokubai Co., Ltd.; "EPOCROSS K" series products (emulsion type) such as "EPOCROSS K-2010E", "EPOCROSS K-2020E", etc., (tradenames) all available from Nippon Shokubai Co., Ltd.; and the like.

As the combination of the isocyanate A and the compound B used in the aqueous composition of the present invention, from the viewpoint of improving rub fastness, solvent resistance and substrate adhesion properties of the resulting printed material, preferred is a combination of the isocyanate A and the carbodiimide compound or a combination of the isocyanate A and the oxazoline compound; more preferred is a combination of the isocyanate A and the carbodiimide compound; even more preferred is a combination of at least one isocyanate A selected from the group consisting of an aliphatic diisocyanate, an alicyclic diisocyanate and modified products of these compounds, and the carbodiimide group-containing polymer; further even more preferred is a combination of at least one isocyanate A selected from the group consisting of hexamethylene diisocyanate (HDI), isophorone diisocyanate (IPDI), hydrogenated xylylene diisocyanate (H6XDI), dicyclohexylmethane diisocyanate (H12MDI) and modified products of these compounds, and the carbodiimide group-containing polymer; still further even more preferred is a combination of hexamethylene diisocyanate (HDI) or a modified product thereof, and the carbodiimide group-containing polymer; and furthermore preferred is a combination of a trimer of HDI containing an isocyanurate ring and the carbodiimide group-containing polymer.

### <Resin C>

The aqueous composition of the present invention may further contain a resin containing a reactive group that is capable of undergoing a crosslinking reaction with at least one compound selected from the group consisting of the isocyanate A and the compound B (hereinafter also referred to merely as a "resin C"). By compounding the resin C in the aqueous composition, the coating film of the ink can be enhanced in density of the crosslinked structure formed through the resin C, so that it is possible to obtain a much firmer coating film of the ink. The aforementioned reactive group may be such a reactive group that is capable of undergoing a crosslinking reaction with at least one group selected from the group consisting of an isocyanate group, a carbodiimide group and an oxazoline group. Specific examples of the reactive group include a carboxy group, a hydroxy group, an amino group, a thiol group and the like.

Among these resins C, preferred is a resin containing a reactive group that is capable of undergoing a crosslinking reaction at least with the compound B. By using such a resin C, even in the case where the ink used in combination with the aforementioned aqueous composition contains no resin containing a reactive group that is capable of undergoing a crosslinking reaction with the isocyanate A or the compound B, it is possible to obtain a printed material that is excellent in rub fastness, solvent resistance and substrate adhesion properties. From the same viewpoint as described above, as the reactive group, preferred is a functional group that is capable of undergoing a crosslinking reaction with at least one group selected from the group consisting of a carbodiimide group and an oxazoline group. Examples of such a reactive group include a carboxy group, a hydroxy group, an amino group, a thiol group and the like. Among these reactive groups, preferred is at least one group selected from the group consisting of a carboxy group and a hydroxy group, and more preferred is a carboxy group (-COOM). Examples of the carboxy group include a group that is capable of releasing a hydrogen ion by dissociation thereof so as to exhibit acidity or an ionic form of the group formed by dissociation thereof (-COO⁻), etc. In the aforementioned chemical formula, M is a hydrogen atom, an alkali metal, ammonium or an organic ammonium.

In the case where the aforementioned reactive group is a functional group that is capable of undergoing a crosslinking reaction with both of the isocyanate A and the compound B, the regenerated active isocyanate is not only subjected to self-crosslinking reaction, but also subjected to crosslinking reaction with the resin C, so that the resulting aqueous composition can be further improved in rub fastness, solvent resistance and substrate adhesion properties.

Examples of the resin C include a polyurethane resin, a (meth)acrylic resin, a styrene-(meth)acrylic resin, a (meth)acrylic-urethane resin and the like. Among these resins, preferred is a polyurethane resin containing a carboxy group. Meanwhile, in the case where the resin C is a copolymer, the resin C may be in the form of any of a random copolymer, a block copolymer, an alternating copolymer and a graft copolymer. Incidentally, the term "(meth)acrylic" as used herein means at least one group selected from the group consisting of an acrylic group and a methacrylic group.

The polyurethane resin containing a carboxy group may be produced, for example, by subjecting an organic compound containing two or more alcoholic hydroxy groups in a molecule thereof (polyol), which includes a dialkanol carboxylic acid, and a polyisocyanate to polyaddition reaction. Examples of the dialkanol carboxylic acid include dimethylol butanoic acid, dimethylol propionic acid and salts of these acids, etc.

The polyol is not particularly limited as long as it contains two or more alcoholic hydroxy groups in a molecule thereof. Examples of the polyol include a polycarbonate polyol, a polyester polyol, a polyether polyol and the like.

Examples of the polyisocyanate include a chain-like aliphatic diisocyanate such as tetramethylene diisocyanate, 1,6-hexamethylene diisocyanate, dodecamethylene diisocyanate, trimethyl hexamethylene diisocyanate, lysine diisocyanate, etc.; an aliphatic diisocyanate having a cyclic structure such as isophorone diisocyanate, a hydrogenated xylylene diisocyanate, dicyclohexylmethane 4,4'-diisocyanate. etc.; an aromatic ring-containing aliphatic diisocyanate such as xylylene diisocyanate, tetramethyl xylylene diisocyanate, etc.; an aromatic diisocyanate such as tolylene diisocyanate, diphenylmethane diisocyanate, etc.; and modified products of these diisocyanates (such as carbodiimide-, uretdione- and uretimine-containing modified products, etc.); and the like.

Examples of the reaction solvent used in the aforementioned polyaddition reaction include acetone, methyl ethyl ketone, tetrahydrofuran, dioxane, ethyl acetate, toluene, xylene and the like. In the aforementioned polyaddition reaction, a chain extender or a reaction terminator may also be used in combination with the aforementioned components, if required. By using the chain extender, it is possible to further increase a molecular weight of the resulting resin. As the chain extender, there may be used a polyol and a polyamine. Also, as the reaction terminator, there may be used a monoalcohol and a monoamine.

The polyurethane resin is preferably used in the form of a dispersion obtained by dispersing the resin in a water-based medium (hereinafter also referred to merely as an "emulsion"). The emulsion of the polyurethane resin may also contain a dispersant such as a surfactant, if required.

The acid value of the polyurethane resin is preferably not less than 5 mgKOH/g, more preferably not less than 10 mgKOH/g and even more preferably not less than 15 mgKOH/g, and is also preferably not more than 30 mgKOH/g, more preferably not more than 25 mgKOH/g and even more preferably not more than 20 mgKOH/g.

Specific examples of commercially available products of the polyurethane resin include "SUPERFLEX" series products available from DKS Co., Ltd., "SANCURE" series products available from The Lubrizol Corporation, "TAKELAC W" series products available from Mitsui Chemicals, Inc., "PERMARIN" series products available from Sanyo Chemical Industries, Ltd., "NeoRez R" series products available from DSM Coating Resins, Inc., "ADEKA BONTIGHTER HUX" series products available from ADEKA Corporation, and the like.

### <Water-Soluble Organic Solvent D>

The aqueous composition of the present invention preferably further contains a water-soluble organic solvent D from the viewpoint of improving storage stability of the aqueous composition and also improving ejection properties of the aqueous composition when ejected by an ink-jet ejection method as well as from the viewpoint of not only suppressing occurrence of a flow of droplets owing to the difference in osmotic pressure between the aqueous composition and the ink when both are contacted with each other to obtain uniform printed characters or images, but also forming a smooth coating film of the ink to improve rub fastness, solvent resistance and substrate adhesion properties of the resulting printed characters or images.

The "water-soluble organic solvent" as used in the present invention means such an organic solvent whose solubility in water as measured by dissolving the organic solvent in 100 mL of water at 25°C is not less than 10 mL.

The boiling point of the water-soluble organic solvent D is preferably not lower than 150°C, more preferably not lower than 160°C, even more preferably not lower than 170°C and further even more preferably not lower than 180°C, and is also preferably not higher than 240°C, more preferably not higher than 230°C, even more preferably not higher than 220°C and further even more preferably not higher than 210°C.

In the case where two or more water-soluble organic solvents are used in combination with each other as the water-soluble organic solvent D, the boiling point of the water-soluble organic solvent D means a weighted mean value of boiling points of the respective organic solvents which are weighted by contents (% by mass) of the organic solvents.

Examples of the water-soluble organic solvent D include a polyhydric alcohol, a polyhydric alcohol alkyl ether, a nitrogen-containing heterocyclic compound, an amide, an amine, a sulfur-containing compound and the like. Of these organic solvents, from the viewpoint of improving ejection properties and storage stability of the aqueous composition, rub fastness, solvent resistance and substrate adhesion properties of the resulting printed material, preferred is a polyhydric alcohol. The polyhydric alcohol may be used in the form of a mixed alcohol containing a plurality of compounds belonging to the concept of the polyhydric alcohol. In addition, a part of the polyhydric alcohol may also be replaced with the polyhydric alcohol alkyl ether. More specifically, the water-soluble organic solvent D may also contain the polyhydric alcohol alkyl ether in addition to the polyhydric alcohol. Also, when using the polyhydric alcohol alkyl ether as the water-soluble organic solvent D, the polyhydric alcohol alkyl ether may be used in the form of a mixed polyhydric alcohol alkyl ether containing a plurality of compounds belonging to the concept of the polyhydric alcohol alkyl ether.

Examples of the polyhydric alcohol include ethylene glycol (boiling point (b.p.) 197°C), propylene glycol (b.p. 188°C), dipropylene glycol (b.p. 232°C), polypropylene glycol, 1,3-propanediol (b.p. 210°C), 2-methyl-1,3-propanediol (b.p. 214°C), 1,2-butanediol (b.p. 192°C), 1,3-butanediol (b.p. 208°C), 1,4-butanediol (b.p. 230°C), 3-methyl-1,3-butanediol (b.p. 203°C), 1,5-pentanediol (b.p. 242°C), 2-methyl-2,4-pentanediol (b.p. 196°C), 1,2,6-hexanetriol (b.p. 178°C), 1,2,4-butanetriol (b.p. 190°C), 1,2,3-butanetriol (b.p. 175°C), petriol (b.p. 216°C) and the like. In addition, diethylene glycol (b.p. 244°C), polyethylene glycol, 1,6-hexanediol (b.p. 250°C), triethylene glycol (b.p. 285°C), tripropylene glycol (b.p. 273°C), glycerin (b.p. 290°C) and the like may also be used in the present invention. These compounds having a boiling point higher than 240°C are preferably used in combination with the aforementioned compounds having a boiling point lower than 240°C.

Examples of the polyhydric alcohol alkyl ether include alkylene glycol monoalkyl ethers, dialkylene glycol monoalkyl ethers, trialkylene glycol monoalkyl ethers and the like. Specific examples of the polyhydric alcohol alkyl ether include ethylene glycol monoethyl ether (b.p. 135°C), ethylene glycol monobutyl ether (b.p. 171°C), diethylene glycol monomethyl ether (b.p. 194°C), diethylene glycol monoethyl ether (b.p. 202°C), diethylene glycol monobutyl ether (b.p. 230°C), triethylene glycol monomethyl ether (b.p. 122°C), triethylene glycol monoisobutyl ether (b.p. 160°C), tetraethylene glycol monomethyl ether (b.p. 158°C), propylene glycol monoethyl ether (b.p. 133°C), dipropylene glycol monomethyl ether (b.p. 190°C), dipropylene glycol monobutyl ether (b.p. 227°C), tripropylene glycol monomethyl ether (b.p. 243°C), tripropylene glycol monobutyl ether and the like. In addition, triethylene glycol monobutyl ether (b.p. 276°C) and the like may also be used in the present invention. In the case where the compounds having a boiling point higher than 240°C are used in the organic solvent, these compounds are preferably used in combination with the aforementioned compounds having a boiling point lower than 240°C.

From the viewpoint of improving rub fastness, solvent resistance and substrate adhesion properties of the resulting printed material, it is more preferred that the water-soluble organic solvent D contains the polyhydric alcohol. Among these polyhydric alcohols contained in the water-soluble organic solvent D, even more preferred are diols having not less than 3 and not more than 6 carbon atoms, further even more preferred are diols having 3 or 4 carbon atoms, and still further even more preferred is propylene glycol.

The content of the polyhydric alcohol in the water-soluble organic solvent D is preferably not less than 60% by mass, more preferably not less than 80% by mass and even more preferably not less than 90% by mass.

### (Contents of Respective Components in Aqueous Composition, etc.)

The contents of the respective components in the aqueous composition are as follows from the viewpoint of improving storage stability of the aqueous composition, rub fastness, solvent resistance and substrate adhesion properties of the resulting printed material.

The content of the isocyanate A in the aqueous composition is preferably not less than 1% by mass, more preferably not less than 3% by mass and even more preferably not less than 5% by mass, and is also preferably not more than 20% by mass, more preferably not more than 15% by mass and even more preferably not more than 10% by mass.

The content of the compound B in the aqueous composition is preferably not less than 0.1% by mass, more preferably not less than 0.3% by mass and even more preferably not less than 0.5% by mass, and is also preferably not more than 10% by mass, more preferably not more than 5% by mass and even more preferably not more than 3% by mass.

The content of the resin C in the aqueous composition is preferably not less than 0.1% by mass, more preferably not less than 0.3% by mass and even more preferably not less than 0.5% by mass, and is also preferably not more than 10% by mass, more preferably not more than 5% by mass and even more preferably not more than 3% by mass.

The content of the water-soluble organic solvent D in the aqueous composition is preferably not less than 7% by mass, more preferably not less than 15% by mass and even more preferably not less than 25% by mass, and is also preferably not more than 48% by mass, more preferably not more than 46% by mass and even more preferably not more than 44% by mass.

The content of water in the aqueous composition is preferably not less than 20% by mass, more preferably not less than 25% by mass and even more preferably not less than 30% by mass, and is also preferably not more than 90% by mass, more preferably not more than 80% by mass, even more preferably not more than 70% by mass and further even more preferably not more than 60% by mass.

The mass ratio of the isocyanate A to the compound B (A/B) in the aqueous composition is not less than 3 and preferably not less than 5, and is not more than 15, preferably not more than 12 and more preferably not more than 10.

The aqueous composition of the present invention preferably contains substantially no colorant. The content of the colorant in the aqueous composition is preferably not more than 1% by mass, more preferably not more than 0.1% by mass, even more preferably not more than 0.01% by mass and further even more preferably 0% by mass. If the aqueous composition contains substantially no colorant, the composition has no adverse influence on a hue of the water-based ink when printing characters or images using the water-based ink in combination with the aqueous composition.

When the aqueous composition of the present invention is used in combination with the ink for ink-jet printing, the resulting printed material can be improved in rub fastness, solvent resistance and substrate adhesion properties. Therefore, the aqueous composition of the present invention is preferably used as a composition for improving fixing properties of the water-based ink for ink-jet printing, and more preferably used as a coating liquid for ink-jet printing which contains the aqueous composition and is ejected by an ink-jetting method. The aqueous composition may further contain other components that may be usually used in a coating liquid ejected by an ink-jetting method, etc., such as a dispersant, a surfactant, a viscosity modifier, a defoaming agent, an antiseptic agent, a mildew-proof agent, a rust preventive, etc.

The aqueous composition may be obtained by mixing the isocyanate A, the at least one compound B selected from the group consisting of the carbodiimide compound and the oxazoline compound and water, if required together with the aforementioned other components, followed by stirring the resulting mixture. It is preferred that the isocyanate A, the carbodiimide compound and the oxazoline compound are respectively compounded in the form of an aqueous solution or an emulsion.

### [Ink Set for Ink-Jet Printing]

The aqueous composition of the present invention is preferably used together with a water-based ink containing a pigment (hereinafter also referred to merely as a "water-based ink" or an "ink") in the form of an ink set for ink-jet printing (hereinafter also referred to merely as an "ink set").

The ink set is such an ink set that contains the aqueous composition and the pigment-containing water-based ink from the viewpoint of improving rub fastness, solvent resistance and substrate adhesion properties of the resulting printed characters or images, and it is preferred that at least one of the aqueous composition and the water-based ink contains a resin containing a reactive group that is capable of undergoing a crosslinking reaction at least with the compound B.

For example, the aqueous composition and the water-based ink are loaded into ink cartridges for respective colors in an ink-jet printing apparatus, and ink droplets are ejected from respective ejection nozzles corresponding to the respective ink cartridges to print characters or images.

As the water-based ink, a water-based ink having a single kind of hue may be used alone, or water-based inks having two or more kinds of hues may be used in combination with each other.

### <Water-Based Ink>

### (Pigment)

The pigment used in the present invention may be either an inorganic pigment or an organic pigment, and may also be used in the form of a lake pigment or a fluorescent pigment. In addition, the inorganic or organic pigment may also be used in combination with an extender pigment, if required.

Specific examples of the inorganic pigment include carbon blacks, metal oxides such as titanium oxide, iron oxide, red iron oxide, chromium oxide, etc., pearlescent pigments, and the like. In particular, the carbon blacks are preferably used for black inks. Examples of the carbon blacks include furnace blacks, thermal lamp blacks, acetylene blacks, channel blacks and the like.

Specific examples of the organic pigment include azo pigments such as azo lake pigments, insoluble monoazo pigments, insoluble disazo pigments, chelate azo pigments, etc.; polycyclic pigments such as phthalocyanine pigments, perylene pigments, perinone pigments, anthraquinone pigments, quinacridone pigments, dioxazine pigments, thioindigo pigments, isoindolinone pigments, quinophthalone pigments, diketopyrrolopyrrole pigments, benzimidazolone pigments, threne pigments, etc.; and the like.

The hue of the pigment is not particularly limited, and there may be used any of achromatic color pigments having a white color, a black color, a gray color, etc.; and chromatic color pigments having a yellow color, a magenta color, a cyan color, a blue color, a red color, an orange color, a green color, etc.

Specific examples of the preferred organic pigments include one or more pigments selected from the group consisting of commercially available products marketed under the names of C.I. Pigment Yellow, C.I. Pigment Red, C.I. Pigment Orange, C.I. Pigment Violet, C.I. Pigment Blue and C.I. Pigment Green with various product numbers.

Examples of the extender pigment include silica, calcium carbonate, talc and the like.

The aforementioned pigments may be used alone or in the form of a mixture of any two or more thereof.

The pigment may be contained in the water-based ink in the form of a self-dispersible pigment, a pigment dispersed in the water-based ink with a dispersant, or pigment-containing water-insoluble polymer particles (hereinafter also referred to merely as "pigment-containing polymer particles").

The term "water-insoluble" of the pigment-containing polymer particles as used herein means that when a polymer constituting the pigment-containing polymer particles is dried to a constant weight at 105°C for 2 hours and then dissolved in 100 g of water at 25°C until reaching a saturation concentration thereof, the solubility in water of the polymer is less than 10 g. The solubility in water of the polymer constituting the pigment-containing polymer particles is preferably not more than 5 g and more preferably not more than 1 g.

### (Resin I)

The ink used in the present invention preferably contains a resin containing a reactive group that is capable of undergoing a crosslinking reaction at least with the compound B (hereinafter also referred to merely as a "resin (I)") from the viewpoint of improving rub fastness, solvent resistance and substrate adhesion properties of the resulting printed material. As the reactive group, preferred is a functional group that is capable of undergoing a crosslinking reaction with at least one group selected from the group consisting of a carbodiimide group and an oxazoline group. Examples of such a reactive group include a carboxy group, a hydroxy group, an amino group, a thiol group and the like. Among these reactive groups, preferred is a carboxy group. As the carboxy group, as similarly described previously as to the aforementioned resin C, there may be mentioned a group that is capable of releasing a hydrogen ion by dissociation thereof so as to exhibit acidity or an ionic form of the group formed by dissociation thereof, etc. In the case where the aforementioned reactive group is a functional group that is also capable of undergoing a crosslinking reaction with the isocyanate A, the regenerated active isocyanate is not only subjected to self-crosslinking reaction, but also subjected to crosslinking reaction with the resin I, so that the resulting printed material can be further improved in rub fastness, solvent resistance and substrate adhesion properties.

The resin I can also be used as a pigment dispersing polymer (Ia) for dispersing the pigment and a fixing aid polymer (Ib) for improving rub fastness, etc., of the resulting printed material. These polymers (Ia) and (Ib) may also be used in combination with each other. More specifically, from the viewpoint of improving dispersibility of the pigment as well as improving rub fastness of the resulting printed material, the water-based ink preferably contains at least one polymer selected from the group consisting of the pigment dispersing polymer (Ia) and the fixing aid polymer (Ib), more preferably contains the fixing aid polymer (Ib), and even more preferably contains both of the pigment dispersing polymer (Ia) and the fixing aid polymer (Ib).

Examples of the pigment dispersing polymer (Ia) for dispersing the pigment include condensation-based resins such as polyester resins, polyurethane resins, etc.; vinyl-based polymers that are obtained by addition-polymerizing a vinyl monomer (such as a vinyl compound, a vinylidene compound and a vinylene compound); and the like. Among these polymers, from the viewpoint of improving rub fastness, solvent resistance and substrate adhesion properties of the resulting printed material, preferred is at least one polymer selected from the group consisting of the polyester resins and vinyl-based resins, and more preferred are the polyester resins. The pigment dispersing polymer (Ia) used herein may be in the form of either an appropriately synthetized product or a commercially available product.

### (Polyester Resin)

The polyester resin used as the pigment dispersing polymer (Ia) contains a constitutional unit derived from an alcohol component and a constitutional unit derived from a carboxylic acid component, and may be produced by subjecting the alcohol component and the carboxylic acid component to polycondensation.

The alcohol component as a raw material monomer of the polyester resin preferably includes an aromatic diol. The aromatic diol is preferably an alkyleneoxide adduct of bisphenol A. Meanwhile, the alkyleneoxide adduct of bisphenol A as used herein means a whole structure of a compound formed by adding an oxyalkylene group to 2,2-bis(4-hydroxyphenyl)propane.

Specific examples of the preferred alkyleneoxide adduct of bisphenol A includes those compounds represented by the following general formula (I-1):

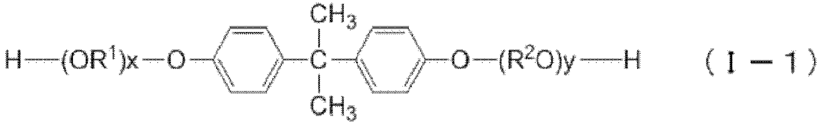

In the general formula (I-1), OR¹ and R²O are respectively an oxyalkylene group, preferably each independently an oxyalkylene group having not less than 1 and not more than 4 carbon atoms, and more preferably an oxyethylene group or an oxypropylene group.

The suffixes x and y each correspond to a molar number of addition of the alkyleneoxide. In addition, from the viewpoint of attaining good reactivity with the carboxylic acid component, an average value of a sum of x and y is preferably not less than 2, and is also preferably not more than 7, more preferably not more than 5 and even more preferably not more than 3.

Furthermore, the OR¹ groups in the number of x and the R²O groups in the number of y may be respectively the same or different from each other. From the viewpoints of improving adhesion properties of the resulting ink to a printing medium, the R¹O groups and the R²O groups are respectively preferably identical to each other. These alkyleneoxide adducts of bisphenol A may be used alone or in combination of any two or more thereof. As the alkyleneoxide adduct of bisphenol A, preferred is at least one compound selected from the group consisting of a propyleneoxide adduct of bisphenol A and an ethyleneoxide adduct of bisphenol A, and more preferred is a propyleneoxide adduct of bisphenol A.

The content of the alkyleneoxide adduct of bisphenol A in the alcohol component is preferably not less than 50 mol%, more preferably not less than 60 mol% and even more preferably not less than 70 mol%, and is also preferably not more than 100 mol%, from the viewpoint of improving dispersibility of the pigment as well as from the viewpoint of improving rub fastness, solvent resistance and substrate adhesion properties of the resulting printed material.

The alcohol component as the raw material monomer of the polyester resin may also contain the following other alcohol component(s) in addition to the alkyleneoxide adduct of bisphenol A. Specific examples of the other alcohol component(s) include ethylene glycol, propylene glycol (1,2-propanediol), glycerin, pentaerythritol, trimethylolpropane, hydrogenated bisphenol A, sorbitol, or alkylene (having not less than 2 and not more than 4 carbon atoms) oxide adducts of these compounds (average molar number of addition of the alkyleneoxide: not less than 1 and not more than 16) and the like.

These other alcohol component(s) may be used alone or in combination of any two or more thereof.

The carboxylic acid component as a raw material monomer of the polyester resin includes carboxylic acids as well as anhydrides and alkyl (having not less than 1 and not more than 3 carbon atoms) esters of these carboxylic acids, and the like.

Examples of the carboxylic acid component include an aromatic dicarboxylic acid, an aliphatic dicarboxylic acid, an alicyclic dicarboxylic acid, a trivalent or higher-valent polycarboxylic acid and the like.

Specific examples of the preferred aromatic dicarboxylic acid include phthalic acid, isophthalic acid and terephthalic acid. Of these aromatic dicarboxylic acids, more preferred is terephthalic acid.

Specific examples of the aliphatic dicarboxylic acid include an unsaturated aliphatic dicarboxylic acid and a saturated aliphatic dicarboxylic acid. As the unsaturated aliphatic dicarboxylic acid, preferred are fumaric acid and maleic acid, and more preferred is fumaric acid. As the saturated aliphatic dicarboxylic acid, preferred are adipic acid and succinic acid.

Specific examples of the preferred alicyclic dicarboxylic acid include cyclohexanedicarboxylic acid, decalinedicarboxylic acid and tetrahydrophthalic acid. Specific examples of the preferred trivalent or higher-valent polycarboxylic acid include trimellitic acid and pyromellitic acid.

Among these carboxylic acid components, preferred are the aromatic dicarboxylic acid and the aliphatic dicarboxylic acid, more preferred is the aliphatic dicarboxylic acid, even more preferred is the unsaturated aliphatic dicarboxylic acid, and further even more preferred is fumaric acid.

The content of the unsaturated aliphatic dicarboxylic acid in the carboxylic acid component is preferably not less than 50 mol%, more preferably not less than 60 mol% and even more preferably not less than 70 mol%, and is also preferably not more than 100 mol%.

These carboxylic acid components may be used alone or in combination of any two or more thereof.

The polyester resin may be produced by conducting the aforementioned polycondensation reaction in the presence of an esterification catalyst, etc., by conventionally known methods. Concretely, the polyester resin may be obtained by the method described in Examples below.

The acid value of the polyester resin is preferably not less than 5 mgKOH/g, more preferably not less than 10 mgKOH/g and even more preferably not less than 15 mgKOH/g, and is also preferably not more than 45 mgKOH/g, more preferably not more than 40 mgKOH/g and even more preferably not more than 35 mgKOH/g, from the viewpoint of improving dispersibility of the pigment as well as from the viewpoint of improving rub fastness, solvent resistance and substrate adhesion properties of the resulting printed material.

The softening point of the polyester resin is preferably not lower than 80°C, more preferably not lower than 85°C and even more preferably not lower than 90°C, and is also preferably not higher than 160°C, more preferably not higher than 150°C and even more preferably not higher than 140°C, from the viewpoint of improving rub fastness, solvent resistance and substrate adhesion properties of the resulting printed material.

The glass transition temperature of the polyester resin is preferably not lower than 50°C and more preferably not lower than 55°C, and is also preferably not higher than 90°C, more preferably not higher than 80°C, even more preferably not higher than 75°C and further even more preferably not higher than 70°C, from the viewpoint of improving rub fastness, solvent resistance and substrate adhesion properties of the resulting printed material.

The weight-average molecular weight of the polyester resin is preferably not less than 5,000, more preferably not less than 7,500 and even more preferably not less than 10,000 from the viewpoint of improving rub fastness, solvent resistance and substrate adhesion properties of the resulting printed material, and is also preferably not more than 100,000, more preferably not more than 50,000 and even more preferably not more than 30,000 from the viewpoint of improving dispersion stability of the pigment.

The acid value, softening point, glass transition temperature and weight-average molecular weight of the polyester resin may be respectively adjusted to desired values by appropriately controlling the kinds and compounding ratios of the monomers used as well as the polycondensation reaction conditions such as reaction temperature and reaction time. In addition, the acid value, softening point, glass transition temperature and weight-average molecular weight of the polyester resin may be respectively measured by the methods described in Examples below.

### [Vinyl-Based Resin]

The vinyl-based resin used as the pigment dispersing polymer (Ia) preferably contains one or more constitutional units selected from the group consisting of a constitutional unit derived from an ionic monomer, a constitutional unit derived from a hydrophobic monomer and a constitutional unit derived from a hydrophilic nonionic monomer (hereinafter also referred to merely as a "nonionic monomer"), and more preferably two or more constitutional units selected from the group consisting of the aforementioned constitutional units. Examples of a combination of the monomers from which the two or more constitutional units are derived include a combination of the ionic monomer and the hydrophobic monomer and a combination of the ionic monomer, the hydrophobic monomer and the nonionic monomer.

The vinyl-based resin may be produced, for example, by subjecting a monomer mixture containing the ionic monomer, the hydrophobic monomer and the nonionic monomer to addition polymerization by conventionally known methods.

Examples of the ionic monomer include anionic monomers such as carboxylic acid monomers, sulfonic acid monomers, phosphoric acid monomers, etc.; and cationic monomers such as *N,N*-dimethylaminoethyl methacrylate, *N,N*-dimethylaminoethyl acrylamide, etc. Among these ionic monomers, preferred are anionic monomers, more preferred are carboxylic acid monomers, and even more preferred is (meth)acrylic acid. Meanwhile, the ionic monomer may also include those monomers that have no ionicity under neutral conditions, but are converted into ions under acid or alkaline conditions, such as acids and amines.

Examples of the hydrophobic monomer include a (meth)acrylate containing a hydrocarbon group derived from an aliphatic alcohol having not less than 1 and not more than 22 carbon atoms; an aromatic group-containing monomer such as a styrene-based monomer, an aromatic group-containing (meth)acrylate, etc.; and a styrene-based macromonomer. The molecular weight of the aromatic group-containing monomer, preferably the styrene-based monomer, is preferably less than 500. The styrene-based macromonomer is a compound containing a polymerizable functional group at one terminal end thereof and having a number-average molecular weight of not less than 500 and not more than 100,000.

Examples of the nonionic monomer include polyalkylene glycol mono(meth)acrylates such as polyethylene glycol mono(meth)acrylate, etc.; alkoxy polyalkylene glycol mono(meth)acrylates such as methoxy polyethylene glycol mono(meth)acrylate, octoxy polyethylene glycol mono(meth)acrylate, etc.; and the like.

Meanwhile, the term "(meth)acrylic acid" as used herein means at least one compound selected from the group consisting of acrylic acid and methacrylic acid. Also, the term "(meth)acrylate" as used herein means at least one compound selected from the group consisting of an acrylate and a methacrylate. In addition, these monomers constituting the vinyl-based resin may be respectively used alone or in combination of any two or more thereof.

The vinyl-based resin used in the water-based ink is preferably such a vinyl-based resin that contains a constitutional unit derived from the at least one ionic monomer selected from the group consisting of acrylic acid and methacrylic acid, and a constitutional unit derived from the at least one hydrophobic monomer selected from the group consisting of the (meth)acrylate containing a hydrocarbon group derived from an aliphatic alcohol, the aromatic group-containing monomer and the styrene-based macromonomer, and more preferably such a vinyl-based resin that further contains a constitutional unit derived from the nonionic monomer.

The contents of the respective monomers in the monomer mixture upon production of the vinyl-based resin (contents of non-neutralized components; hereinafter defined in the same way), or the contents of the constitutional unit derived from the ionic monomer, the constitutional unit derived from the hydrophobic monomer and the constitutional unit derived from the nonionic monomer in the vinyl-based resin are as follows from the viewpoint of improving dispersion stability of the pigment.

The content of the ionic monomer component is preferably not less than 3% by mass, more preferably not less than 5% by mass and even more preferably not less than 10% by mass, and is also preferably not more than 40% by mass, more preferably not more than 30% by mass and even more preferably not more than 20% by mass.

The content of the hydrophobic monomer component is preferably not less than 30% by mass, more preferably not less than 40% by mass and even more preferably not less than 50% by mass, and is also preferably not more than 90% by mass, more preferably not more than 80% by mass and even more preferably not more than 70% by mass.

In the case where the nonionic monomer component is included, the content of the nonionic monomer component is preferably not less than 5% by mass, more preferably not less than 10% by mass and even more preferably not less than 20% by mass, and is also preferably not more than 40% by mass, more preferably not more than 35% by mass and even more preferably not more than 30% by mass.

The weight-average molecular weight of the vinyl-based resin is preferably not less than 5,000, more preferably not less than 10,000 and even more preferably not more than 30,000, and is also preferably not more than 100,000, more preferably not more than 80,000 and even more preferably not more than 60,000, from the viewpoint of improving dispersibility of the pigment as well as from the viewpoint of improving rub fastness, solvent resistance and substrate adhesion properties of the resulting printed material.

Specific examples of commercially available products of the vinyl-based resin include polyacrylic acids such as "ARON AC-10SL" available from Toagosei Co., Ltd., etc.; styrene-acrylic resins such as "JONCRYL 67", "JONCRYL 611", "JONCRYL 678", "JONCRYL 680", "JONCRYL 690" and "JONCRYL 819" all available from BASF Japan, Ltd., etc. ; and the like.

The weight-average molecular weight of the vinyl-based resin may be measured by the method described in Examples below.

The water-based ink preferably contains the fixing aid polymer (Ib) from the viewpoint of improving rub fastness, solvent resistance and substrate adhesion properties of the resulting printed material. The fixing aid polymer (Ib) is preferably used in the form of pigment-free polymer particles. As the polymer component of the pigment-free polymer particles, i.e., as the fixing aid polymer (Ib), there may be mentioned condensation-based resins such as polyurethane resins, polyester resins, etc.; and vinyl-based resins such as acrylic resins, styrene-based resins, styrene-acrylic resins, butadiene-based resins, styrene-butadiene-based resins, vinyl chloride-based resins, vinyl acetate-based resins, acrylic-silicone-based resins, etc. Among these resins, from the viewpoint of improving rub fastness, solvent resistance and substrate adhesion properties of the resulting printed material, preferred is at least one resin selected from the group consisting of polyester resins and acrylic resins, and more preferred are polyester resins.

In addition, from the viewpoint of enhancing productivity of the water-based ink, the fixing aid polymer (Ib) is preferably used in the form of an aqueous dispersion containing the pigment-free polymer particles. As the fixing aid polymer (Ib), there may be used either appropriately synthetized products or commercially available products.

The polyester resin may be obtained by subjecting an alcohol component and a carboxylic acid component of the polyester resin used as the aforementioned pigment dispersing polymer (Ia) to polycondensation reaction. The aqueous dispersion of the polyester resin may also contain a dispersant such as a surfactant, if required.

The aqueous dispersion of the polyester resin may be obtained by the method of adding the polyester resin to a water-based medium and then subjecting the resulting mixture to dispersion treatment using a disperser, etc., the method of gradually adding a water-based medium to the polyester resin and then subjecting the resulting mixture to phase inversion emulsification, and the like. Among these methods, from the viewpoint of enhancing productivity of the aqueous dispersion and improving dispersion stability of the pigment-free polymer particles in the aqueous dispersion, the method using the phase inversion emulsification is preferably used. As the phase inversion emulsification method, there may be mentioned, for example, the method described in JP 2016-222896A. Specifically, there is preferably used such a method in which the polyester resin is first dissolved in an organic solvent, and then a water-based medium is added to the resulting solution to subject the solution to phase inversion emulsification, followed by removing the organic solvent therefrom.

The acrylic resin may be produced by copolymerizing a mixture of the monomers by conventionally known polymerization methods. Examples of the preferred polymerization methods include an emulsion polymerization method, a suspension polymerization method and the like. Among these polymerization methods, more preferred is an emulsion polymerization method.

Examples of the commercially available products of the fixing aid polymer (Ib) include polyester resins such as "elitel KA-5034", "elitel KA-5071S", "elitel KZA-1734", "elitel KZA-6034", "elitel KZA-1449", "elitel KZA-0134" and "elitel KZA-3556" (tradenames) all available from UNITIKA, Ltd., etc.; polyurethane resins such as "WBR-2018" and "WBR-2000U" both available from Taisei Fine Chemical Co., Ltd., etc.; acrylic resins such as "Neocryl A1127" (tradename; anionic self-crosslinkable water-based acrylic resin) available from DSM Coating Resins, Inc., "JONCRYL 390", "JONCRYL 7100", "JONCRYL 7600", "JONCRYL 537J", "JONCRYL PDX-7164", "JONCRYL 538J" and "JONCRYL 780" all available from BASF Japan, Ltd., etc.; styrene-butadiene resins such as "SR-100" and "SR-102" both available from Nippon A & L Inc., etc.; vinyl chloride-based resins such as "VINYBLAN 700" and "VINYBLAN 701" both available from Nissin Chemical Industry Co., Ltd., etc.; and the like.

The weight-average molecular weight of the fixing aid polymer (Ib) used in the present invention is preferably not less than 10,000 and more preferably not less than 15,000, and is also preferably not more than 100,000 and more preferably not more than 50,000, from the viewpoint of improving rub fastness, solvent resistance and substrate adhesion properties of the resulting printed material.

The average particle size of particles of the fixing aid polymer (Ib) in the dispersion or water-based ink containing the particles of the fixing aid polymer (Ib) is preferably not less than 10 nm, more preferably not less than 30 nm, even more preferably not less than 50 nm and further even more preferably not less than 70 nm, and is also preferably not more than 300 nm, more preferably not more than 200 nm, even more preferably not more than 150 nm and further even more preferably not more than 130 nm, from the viewpoint of improving storage stability of the resulting ink.

The weight-average molecular weight and average particle size of the fixing aid polymer (Ib) may be respectively measured by the methods described in Examples below.

The water-based ink preferably contains pigment-containing water-insoluble polymer particles (hereinafter also referred to merely as "pigment-containing polymer particles") from the viewpoint of improving dispersion stability and ejection stability of the resulting ink. More specifically, the pigment is preferably contained in the water-based ink in the form of pigment-containing polymer particles from the same viewpoint as described above. The pigment-containing polymer particles may have any configuration as long as the particles are formed of the pigment and the water-insoluble polymer, and may be such particles as being formed by adsorbing the water-insoluble polymer onto the pigment in the water-based ink. Examples of the configuration of the pigment-containing polymer particles include the particle configuration in which the pigment is enclosed in the polymer, the particle configuration in which the pigment is uniformly dispersed in the polymer, and the particle configuration in which the pigment is exposed onto a surface of the respective polymer particles, etc., as well as a mixture of these particle configurations. Among these particle configurations, from the viewpoint of improving dispersion stability and ejection stability of the resulting ink, preferred is the particle configuration in which the pigment is enclosed in the water-insoluble polymer.

As the polymer constituting the pigment-containing water-insoluble polymer particles, there may be mentioned the same polymers as described above as to the pigment dispersing polymer (Ia). Among these polymers, from the viewpoint of improving rub fastness, solvent resistance and substrate adhesion properties of the resulting ink, preferred is at least one polymer selected from the group consisting of polyester resins and vinyl-based resins, and more preferred are polyester resins.

The pigment-containing polymer particles may be obtained by subjecting the pigment and the pigment dispersing polymer (Ia), if required together with a neutralizing agent, a surfactant, etc., to dispersion treatment by conventionally known methods.

The average particle size of the pigment-containing polymer particles is preferably not less than 10 nm, more preferably not less than 30 nm, even more preferably not less than 50 nm and further even more preferably not less than 70 nm, and is also preferably not more than 300 nm, more preferably not more than 200 nm, even more preferably not more than 150 nm and further even more preferably not more than 130 nm, from the viewpoint of improving dispersion stability and ejection stability of the resulting ink as well as from the viewpoint of improving rub fastness, solvent resistance and substrate adhesion properties of the resulting printed material.

The average particle size of the pigment-containing polymer particles may be measured by the method described in Examples below.

The water-based ink may further contain an organic solvent, if required, as a component other than the pigment, the resin I and water. Examples of the preferred organic solvent used in the water-based ink include those organic solvents mentioned above as to the water-soluble organic solvent D used in the aforementioned aqueous composition. In addition, the water-based ink may also contain, as an optional component(s), various additives such as a humectant, a wetting agent, a penetrant, a dispersant, a surfactant, a viscosity modifier, a defoaming agent, an antiseptic agent, a mildew-proof agent, a rust preventive, etc.

The water-based ink may be produced by mixing the pigment, the resin I and water, if required together with a neutralizing agent, a surfactant, an organic solvent, etc., followed by stirring the resulting mixture.

The contents of the respective components in the water-based ink are as follows. In the case where the water-based ink contains the pigment-containing polymer particles, after previously subjecting the pigment and the resin I, preferably the pigment and the pigment dispersing polymer (Ia), to dispersion treatment to obtain a dispersion of the pigment-containing polymer particles, the thus obtained dispersion may be compounded in the ink. From the viewpoint of improving dispersion stability and ejection stability of the resulting ink as well as from the viewpoint of improving rub fastness, solvent resistance and substrate adhesion properties of the resulting printed material, the dispersion of the pigment-containing polymer particles is more preferably produced by the method in which after dissolving the pigment dispersing polymer (Ia) in the organic solvent prior to the dispersion treatment and then subjecting the resulting solution together with the pigment to the dispersion treatment, the organic solvent is removed from the thus obtained dispersion.

The content of the pigment in the water-based ink is preferably not less than 1% by mass, more preferably not less than 2% by mass and even more preferably not less than 3% by mass from the viewpoint of enhancing optical density of the resulting printed material, and is also preferably not more than 15% by mass, more preferably not more than 10% by mass, even more preferably not more than 8% by mass and further even more preferably not more than 6% by mass from the viewpoint of reducing viscosity of the resulting ink as well as from the viewpoint of improving rub fastness, solvent resistance and substrate adhesion properties of the resulting printed material.

The content of the resin (I) in the water-based ink is preferably not less than 0.5% by mass, more preferably not less than 1% by mass, even more preferably not less than 2% by mass and further even more preferably not less than 3% by mass from the viewpoint of improving rub fastness, solvent resistance and substrate adhesion properties of the resulting printed material, and is also preferably not more than 15% by mass, more preferably not more than 12% by mass and even more preferably not more than 10% by mass from the viewpoint of reducing viscosity of the resulting ink.

Incidentally, in the case where both of the pigment dispersing polymer (Ia) and the fixing aid polymer (Ib) are contained in the water-based ink, the content of the resin (I) in the water-based ink is a total content of the pigment dispersing polymer (Ia) and the fixing aid polymer (Ib) in the water-based ink.

The content of water in the water-based ink is preferably not less than 30% by mass, more preferably not less than 40% by mass and even more preferably not less than 50% by mass, and is also preferably not more than 80% by mass, more preferably not more than 75% by mass and even more preferably not more than 70% by mass, from the viewpoint of improving rub fastness, solvent resistance and substrate adhesion properties of the resulting printed material.

In the case where the water-based ink contains the organic solvent, the content of the organic solvent in the water-based ink is preferably not less than 5% by mass, more preferably not less than 10% by mass and even more preferably not less than 20% by mass, and is also preferably not more than 60% by mass, more preferably not more than 50% by mass and even more preferably not more than 40% by mass, from the viewpoint of improving ejection stability of the resulting ink as well as from the viewpoint of improving rub fastness, solvent resistance and substrate adhesion properties of the resulting printed material.

### [Ink-Jet Printing Method]

The aqueous composition of the present invention is preferably used together with the aforementioned water-based ink in an ink-jet printing method. In the case where at least one of the aqueous composition and the water-based ink contains the resin containing a reactive group that is capable of undergoing a crosslinking reaction at least with the compound B, after bringing the aqueous composition and the water-based ink into contact with each other on a printing medium, the isocyanate A, the compound B and the aforementioned resin are subjected to crosslinking reaction, so that it is possible to obtain a printed material that is excellent in rub fastness, solvent resistance and substrate adhesion properties.

In the ink-jet printing method of the present invention, it is preferred that at least the water-based ink is ejected by an ink-jet ejection method.

As the method of bringing the aqueous composition and the water-based ink into contact with each other, there may be used the method in which the aqueous composition is applied to a region of the surface of the printing medium to which the water-based ink is previously applied by an ink-jet ejection method, or the method in which the water-based ink is applied by an ink-jet ejection method to a region of the surface of the printing medium to which the aqueous composition is previously applied.

The method of applying the aqueous composition is not particularly limited, and the aqueous composition may be applied by conventionally known methods such as a coating method, a dipping method, an ink-jet ejection method, etc. Among these methods, preferred is an ink-jet ejection method.

From the viewpoint of improving rub fastness, solvent resistance and substrate adhesion properties of the resulting printed material, in the case where at least one of the aqueous composition and the water-based ink contains the resin containing a reactive group that is capable of undergoing a crosslinking reaction at least with the compound B, the ink-jet printing method of the present invention preferably includes the following steps 1 and 2.

Step 1: ejecting the aforementioned aqueous composition and the aforementioned water-based ink onto the surface of the printing medium by an ink-jetting method to print characters or images thereon; and

Step 2: subjecting the isocyanate A, the compound B and the aforementioned resin which are present in the characters or images printed in the step 1 to crosslinking reaction.

### (Step 1)

The step 1 is the step of ejecting the aforementioned aqueous composition and the aforementioned water-based ink onto the surface of the printing medium by an ink-jetting method to print characters or images thereon.

The step 1 preferably further includes a step 1-1 of ejecting the water-based ink to the printing medium by an ink-jetting method (hereinafter also referred to merely as a "step 1-1") and a step 1-2 of ejecting the aqueous composition to the printing medium by an ink-jetting method (hereinafter also referred to merely as a "step 1-2"). It is more preferred that the step 1-1 is conducted before or simultaneously with the step 1-2, and it is even more preferred that the step 1-1 is conducted before the step 1-2.

By conducting the step 1-1 before the step 1-2, it is possible to more effectively obtain a printed material that is excellent in rub fastness, solvent resistance and substrate adhesion properties. In this case, the time period elapsed between the time at which the water-based ink is applied to the printing medium and the time at which the aqueous composition is applied to the printing medium is not particularly limited.

The ink-jetting method of ejecting the aqueous composition and the water-based ink is preferably a piezoelectric method from the viewpoint of improving ejection properties thereof.

The amount of the aqueous composition applied onto the printing medium in terms of a solid content thereof is preferably not less than 0.1 g/m², more preferably not less than 0.75 g/m² and even more preferably not less than 1.5 g/m², and is also preferably not more than 5.0 g/m², more preferably not more than 3.5 g/m² and even more preferably not more than 2.0 g/m², from the viewpoint of improving rub fastness, solvent resistance and substrate adhesion properties of the resulting printed material.

The amount of the water-based ink applied onto the printing medium in terms of a solid content thereof is preferably not less than 0.5 g/m², more preferably not less than 1.5 g/m² and even more preferably not less than 2.0 g/m², and is also preferably not more than 10 g/m², more preferably not more than 7.5 g/m² and even more preferably not more than 5.0 g/m², from the viewpoint of improving rub fastness, solvent resistance and substrate adhesion properties of the resulting printed material.

### (Step 2)

The step 2 is the step of subjecting the isocyanate A, the compound B and the resin contained in the aqueous composition or the water-based ink, which are present in the characters or images printed in the step 1, to crosslinking reaction. By conducting the step 2, it is possible to form a firm coating film of the ink. The crosslinking reaction is preferably conducted by subjecting the printing medium on which the characters or images are printed to heat treatment.

The heat treatment is not particularly limited. The heat treatment may be conducted by the method of applying a hot air to a surface of the printed characters or images formed on the printing medium, the method of approaching a heater to the surface of the printed characters or images formed on the printing medium, the method of bringing a heater into contact with a surface of the printing medium opposed to its surface on which the printed characters or images are formed, the method of heating the surface of the printed characters or images formed on the printing medium by steam curing using a high-temperature steam under an ordinary pressure or under a high pressure, and the like.

The heating temperature is preferably not lower than the dissociation temperature of the isocyanate A. More specifically, the heating temperature is preferably not lower than 100°C, more preferably not lower than 110°C and even more preferably not lower than 120°C, and is also preferably not higher than 200°C, more preferably not higher than 190°C, even more preferably not higher than 170°C, further even more preferably not higher than 150°C and still further even more preferably not higher than 140°C. In addition, the heating temperature is preferably lower than the temperature at which the printing medium suffers from deformation. In the case where a shrink film is used as the printing medium, the heating temperature is preferably not higher than the temperature at which the resulting printed material is still practically usable without any problems even when the printing medium undergoes shrinkage. Moreover, in the case where the shrink film is used as the printing medium, by heating the shrink film that is kept attached to an aimed object, it is possible to conduct the crosslinking reaction of the characters or images printed and adhesion of the shrink film to the object by shrinkage thereof at the same time only during the single step.

The heating time is preferably not less than 1 minute, more preferably not less than 3 minutes and even more preferably not less than 5 minutes, and is also preferably not more than 30 minutes, more preferably not more than 20 minutes and even more preferably not more than 15 minutes.

In addition, the step 2 preferably further includes the step of drying the printed characters or images obtained in the step 1 (hereinafter also referred to merely as a "step 2-1") before conducting the step of heating the printed characters or images to the temperature not lower than the dissociation temperature of the aforementioned isocyanate A (hereinafter also referred to merely as a "step 2-2"). In the step 2-1, the crosslinking reaction between the compound B and the resin contained in the aqueous composition or the water-based ink is allowed to proceed, and then in the step 2-2, the crosslinking reaction of the isocyanate A is allowed to proceed, so that it is possible to efficiently conduct the crosslinking reaction of the printed characters or images in a stepwise manner.

The temperature of conducting the step 2-1 is preferably lower than the dissociation temperature of the isocyanate A. More specifically, the temperature of conducting the step 2-1 is preferably not lower than 30°C, more preferably not lower than 40°C and even more preferably not lower than 45°C, and is also preferably lower than 100°C, more preferably not higher than 80°C and even more preferably not higher than 60°C.

The time of the step 2-1 is preferably not less than 1 minute and more preferably not less than 2 minutes, and is also preferably not more than 20 minutes, more preferably not more than 10 minutes and even more preferably not more than 5 minutes.

The printing medium used in the ink-jet printing method of the present invention is not particularly limited.

Examples of the printing medium used herein include a high-water absorbing plain paper, a low-water absorbing coated paper and a non-water absorbing resin film. Among these printing media, from the viewpoint of improving rub fastness, solvent resistance and substrate adhesion properties of the resulting printed material, preferred is a low-water absorbing printing medium, more preferred are a low-water absorbing coated paper and a non-water absorbing resin film, and even more preferred is a non-water absorbing resin film. Specific examples of the coated paper include a versatile glossy coated paper, a multi-color foam glossy coated paper, and the like. As the resin film, preferred is at least one film selected from the group consisting of a polyester film, a polyvinyl chloride film, a polypropylene film and a polyethylene film. The surface of the resin film on which the printed characters or images are formed may be subjected to corona treatment.

Examples of generally commercially available products of the resin film include "LUMIRROR T60" (polyester) available from Toray Industries Inc., "PVC80B P" (polyvinyl chloride) available from Lintec Corporation, "DGS-210WH" (polyvinyl chloride) available from Roland DG Corporation, a transparent polyvinyl chloride film "RE-137" (polyvinyl chloride) available from MIMAKI ENGINEERING Co., Ltd., "KINATH KEE 70CA" (polyethylene) available from Lintec Corporation, "YUPO SG90 PAT1" (polypropylene) available from Lintec Corporation, "FOR" and "FOA" (polypropylene) both available from Futamura Chemical Co, Ltd., "BONYL RX" (nylon) available from Kohjin Film & Chemicals Co., Ltd., "EMBLEM ONBC" (nylon) available from UNITIKA Ltd., and the like.

The aforementioned resin film may be a shrink film that undergoes contraction upon heating, The shrink film is in the from of a film obtained by subjecting a non-oriented film formed by known production methods to stretching treatment to thereby allow the film to exhibit molecular orientation, which undergoes no contraction at an ordinary temperature, but contraction upon heating. Examples of the shrink film include films formed of at least one thermoplastic resin selected from the group consisting of polyester-based resins; styrene-based resins such as polystyrene, a styrene-butadiene copolymer, etc.; polylactic acids; polyolefin-based resins such as polyethylene, polypropylene, polyolefins, etc.; vinyl chloride-based resins; a mixture of any two or more of these resins; and the like, as well as a laminated film of these films.

Specific examples of commercially available products of the shrink film include "SPACECLEAN S7042" available from TOYOBO Co., Ltd.; "DXL" series products, "HISHIPET" series products, "PLABIO" series products and "HYBREX DL" series products all available from Mitsubishi Chemical Corporation; "BONSET" series products available from C.I. TAKIRON Corporation; "FANCYWRAP PET" series products available from GUNZE Ltd.; and the like.

### EXAMPLES

In the following Production Examples, Examples and Comparative Examples, the "part(s)" and "%" indicate "part(s) by mass" and "% by mass", respectively, unless otherwise specified. Various properties of the resins, etc., were measured by the following methods.

### [Acid Value of Polyester Resin]

The acid value of the polyester resin was measured by the same neutralization titration method as prescribed in JIS K 0070: 1992 except that only a mixed solvent of ethanol and ether used as a measuring solvent in the method was replaced with a mixed solvent containing acetone and toluene at a volume ratio [acetone: toluene] of 1:1.

### [Softening Point of Polyester Resin]

Using a flow tester "CFT-500D" available from Shimadzu Corporation, 1 g of a sample to be measured was extruded through a nozzle having a die pore diameter of 1 mm and a length of 1 mm while heating the sample at a temperature rise rate of 6°C/minute and applying a load of 1.96 MPa thereto by a plunger. The softening point of the sample was determined as the temperature at which a half amount of the sample was flowed out when plotting a downward movement of the plunger of the flow tester relative to the temperature.

### [Glass Transition Temperature of Polyester Resin]

Using a differential scanning calorimeter "Pyris 6 DSC" commercially available from PerkinElmer Co., Ltd., a sample to be measured was weighed in an amount of 5 mg in an aluminum pan, and heated to 200°C and then cooled from 200°C to 0°C at a temperature drop rate of 10°C/minute, and thereafter heated again at a temperature rise rate of 10°C/minute to prepare an endothermic characteristic curve thereof. The temperature at which an extension of a baseline below an endothermic maximum peak temperature on the curve was intersected with a tangential line having a maximum inclination of the curve in the range of from a rise-up portion to an apex of the peak was read as a glass transition temperature of the sample.

Meanwhile, in the case were the sample was in the form of an aqueous dispersion, the aqueous dispersion was freeze-dried at -10°C for 9 hours using a freeze dryer "FDU-2100" available from Tokyo Rika Kikai Co., Ltd., and the thus obtained freeze-dried product was used as the sample.

### [Weight-Average Molecular Weight (Mw) of Polyester Resin]

The weight-average molecular weight (Mw) of the polyester resin was measured by the following gel permeation chromatography.

### (1) Preparation of Sample Solution

A polyester resin to be measured was dissolved in chloroform to prepare a solution of the polyester resin having a concentration of 0.5 g/100 mL. Next, the resulting solution was subjected to filtration treatment by passing through a fluororesin filter "FP-200" having a pore size of 2 µm available from Sumitomo Electric Industries, Ltd., to remove insoluble components therefrom, thereby preparing a sample solution.

### (2) Measurement of Molecular Weight

Using the following measuring apparatus and analytical columns, tetrahydrofuran as an eluent was allowed to flow through the analytical columns at a flow rate of 1 mL/minute, and the columns were stabilized in a thermostat at 40°C, and then 100 µL of the sample solution was injected into the columns to measure a molecular weight of the sample. The weight-average molecular weight of the sample was calculated on the basis of a calibration curve previously prepared. The calibration curve of the molecular weight was prepared by using the following monodisperse polystyrenes (monodisperse polystyrenes having weight-average molecular weights (Mw) of 2.63 × 10³, 2.06 × 10⁴ and 1.02 × 10⁵ all available from Tosoh Corporation as well as monodisperse polystyrenes having weight-average molecular weights (Mw) of 2.10 × 10³, 7.00 × 10³ and 5.04 × 10⁴ all available from GL. Sciences Inc., as reference standard samples.

### <Measuring Conditions>

Measuring Apparatus: "CO-80 10" available from Tosoh Corporation
Analytical Columns: "GMHXL" + "G3000HXL" both available from Tosoh Corporation

### [Weight-Average Molecular Weight (Mw) of Vinyl-Based Resin]

Using the following measuring apparatus and analytical columns, the measurement was conducted by gel permeation chromatography using a solution prepared by dissolving phosphoric acid and lithium bromide in N,N-dimethylformamide such that concentrations of phosphoric acid and lithium bromide in the resulting solution were 60 mmol/L and 50 mmol/L, respectively, as an eluent. The weight-average molecular weight (Mw) of the sample was calculated on the basis of a calibration curve previously prepared by using the following monodisperse polystyrenes (product name: "TSKgel Standard Polystyrenes"; type names: "A-500", "A-2500", F-1" and "F-10" all available from Tosoh Corporation. The sample solution used in the measurement was preapred by dissolving the vinyl-based resin in N,N-dimethylformamide such that a concentrations of the vinyl-based resin in the resulting solution was 0.3%.

### <Measuring Conditions>

Measuring Apparatus: "HLC-8120GPC" available from Tosoh Corporation
Analytical Columns: "TSK-GEL, α-M" x 2 available from Tosoh Corporation
Column Temperature: 40°C
Flow Rate: 1 mL/min

### [Solid Content]

Sodium sulfate dried to constant weight in a desiccator was weighed in an amount of 10.0 g and charged into a 30 mL polypropylene container (inner diameter: 40 mm; height: 30 mm), and 1.0 g of a sample to be measured was added to the container, and the contents of the container were mixed with each other to obtain a mixture. Then, the resulting mixture was weighed, and maintained in the container at 105°C for 2 hours to remove volatile components therefrom. The mixture was further allowed to stand in a desiccator for 15 minutes to measure a mass of the mixture after removing the volatile components from the mixture. The mass of the sample after removing the volatile components from the sample was determined by subtracting the mass of the sodium sulfate from the mass of the mixture after removing the volatile components from the mixture. The solid content (%) of the sample was calculated by dividing the mass of the sample after removing the volatile components from the sample by the mass of the sample before removing the volatile components from the sample.

### [Average Particle Sizes of Pigment-Containing Water-Insoluble Polymer Particles and Pigment-Free Polymer Particles]

The cumulant average particle size of the particles in the dispersion was measured using a laser particle analyzing system "ELS-8000" (cumulant analysis) available from Otsuka Electrics Co., Ltd., and defined as an average particle size of the pigment-containing polymer particles or pigment-free polymer particles. The above measurement was conducted under the conditions including a temperature of 25°C, an angle between incident light and detector of 90° and a cumulative number of 100 times, and a refractive index of water (1.333) was input to the analyzing system as a refractive index of the dispersing medium. The measurement was conducted by controlling a concentration of the dispersion to be measured to 5 × 10⁻³%.

### [Water Absorption of Printing Medium as Measured by Contacting Printing Medium with Pure Water for 100 Milliseconds]

Using an automatic scanning absorptometer "KM500win" available from Kumagai Riki Kogyo Co., Ltd., the amount of pure water transferred to a printing medium when contacting the printing medium with pure water for 100 milliseconds was measured at 23°C under a relative humidity of 50%. The thus measured amount of pure water transferred to the printing medium was defined as a water absorption of the printing medium as measured in a pure water contact time of 100 milliseconds. The measuring conditions are shown below.

### "Spiral Method"

Contact time (sec): 0.010 to 1.0
Pitch (mm): 7
Length Per Sampling (degree): 86.29
Start Radius (mm): 20
End Radius (mm): 60
Min Contact Time (ms): 10
Max Contact Time (ms): 1,000
Sampling Pattern (1-50): 50
Number of Sampling Points (>0): 19

### "Square Head"

Slit Span (mm): 1
Slit Width (mm): 5

The pigment, organic solvents, surfactant and pH controller used in the following Production Examples, Examples and Comparative Examples are as follows.

### [Pigment]

- Black pigment: PB7 (carbon black) available from Cabot Corporation

### [Organic Solvents]

- BDG: Diethylene glycol monobutyl ether available from Wako Pure Chemical Industries, Ltd.
- PG: Propylene glycol available from Wako Pure Chemical Industries, Ltd.

### [Surfactant]

- KF6011: Alkylene glycol-modified polydimethylsiloxane "KF-6011" (tradename; nonionic surfactant) available from Shin-Etsu Chemical Co., Ltd.

### [pH Controller]

- MDEA: N-methyl diethanolamine available from Wako Pure Chemical Industries, Ltd.

### Production Examples 1-1 and 1-2 (Production of Polyester Resins P-1 and P-2)

The respective raw material monomers (alcohol component and carboxylic acid component), the esterification catalyst and the esterification co-catalyst as shown in Table 1 were compounded with each other in amounts shown in Table 1, and charged into a 10 L-capacity four-necked flask equipped with a thermometer, a stirring device, a flow-down type condenser and a nitrogen inlet tube. The contents of the flask were reacted at 210°C for 10 hours in a nitrogen atmosphere in a mantle heater, and then the reaction was further continued under -8.3 kPa (G) until a softening point of the resulting polymer reached the temperature shown in Table 1, thereby obtaining respective polyester resins P-1 and P-2. Various properties of the thus obtained polyester resins are shown in Table 1.

**TABLE 1**

| | | | Production Example 1-1 | | Production Example 1-2 | |
|---|---|---|---|---|---|---|
| Polyester resin | | | P-1 | | P-2 | |
| Raw material monomers | | | g | mole part(s)*¹ | g | mole part(s)*¹ |
| | Alcohol component | BPA-PO*² | 3718 | 100 | 5740 | 100 |
| | Carboxylic acid component | Terephthalic acid | - | - | 1633 | 60 |
| | | Fumaric acid | 1282 | 104 | 571 | 30 |
| | | Trimellitic anhydride | - | - | 378 | 12 |
| Esterification catalyst | Tin (II) di(2-ethyl hexanoate) [g] | | 25 | | 40 | |
| Esterification co-catalyst | 3,4,5-Trihydroxybenzoic acid [g] | | 0.25 | | - | |
| Properties of polyester resin | Acid [mgKOH/g] | | 22.4 | | 31.0 | |
| | Softening point [°C] | | 100.9 | | 122.0 | |
| | Glass transition temperature [°C] | | 58.5 | | 72.0 | |
| | Weight-average molecular weight | | 13700 | | 20700 | |

| | | | | | | |
|---|---|---|---|---|---|---|
| Note *1: Mole part(s) on the basis of 100 mole parts of a whole amount of the alcohol component *2: Polyoxypropylene (2.2)-2,2-bis(4-hydroxyphenyl)propane | | | | | | |

### Production Example 1-3 (Production of Vinyl-Based Resin P-3)

The respective raw material monomers, the organic solvent (methyl ethyl ketone (hereinafter also referred to merely as "MEK")) and the polymerization chain transfer agent (2-mercaptoethanol) as shown in the column "Initially Charged Monomer Solution" in Table 2 were charged into a reaction vessel equipped with two dropping funnels 1 and 2 and mixed with each other, and an inside atmosphere of the reaction vessel was replaced with nitrogen gas, thereby obtaining an "initially charged monomer solution".

On the other hand, the respective raw material monomers, the aforementioned organic solvent, the polymerization initiator "V-65" (tradename; 2,2'-azobis(2,4-dimethylvaleronitrile)) available from Wako Pure Chemical Industries, Ltd., and the aforementioned polymerization chain transfer agent as shown in the column "Dropping Monomer Solution 1" in Table 2 were mixed with each other to obtain a "dropping monomer solution 1". The thus obtained "dropping monomer solution 1" was charged into the dropping funnel 1, and an inside atmosphere of the dropping funnel 1 was replaced with nitrogen gas.

Also, the respective raw material monomers, the aforementioned organic solvent, the aforementioned polymerization initiator and the aforementioned polymerization chain transfer agent as shown in the column "Dropping Monomer Solution 2" in Table 2 were mixed with each other to obtain a "dropping monomer solution 2". The thus obtained "dropping monomer solution 2" was charged into the dropping funnel 2, and an inside atmosphere of the dropping funnel 2 was replaced with nitrogen gas.

In a nitrogen atmosphere, the "initially charged monomer solution" in the reaction vessel was maintained at 77°C while stirring, and the "dropping monomer solution 1" in the dropping funnel 1 was gradually added dropwise into the reaction vessel over 3 hours. Next, the "dropping monomer solution 2" in the dropping funnel 2 was gradually added dropwise into the reaction vessel over 2 hours.

After completion of the dropwise addition, the resulting mixed solution in the reaction vessel was stirred at 77°C for 0.5 hour. Then, a polymerization initiator solution prepared by dissolving 0.6 part by mass of the aforementioned polymerization initiator in 27.0 parts by mass of MEK was added to the mixed solution, and the resulting reaction solution was aged at 77°C for 1 hour while stirring.

The aforementioned procedure including the preparation and addition of the polymerization initiator solution and the aging of the reaction solution was repeated five more times. Then, while maintaining the reaction solution in the reaction vessel at 80°C for 1 hour, MEK was added thereto, thereby obtaining a solution of a vinyl-based resin P-3 (solid content: 40.8%). The weight-average molecular weight (Mw) of the thus obtained vinyl-based resin P-3 was 52,700.

**TABLE 2**

| | | | Production Example 1-3 | | |
|---|---|---|---|---|---|
| | | | Vinyl-based resin P-3 | | |
| | | | Initially charged monomer solution [part(s) by mass] | Dropping monomer solution 1 [part(s) by mass] | Dropping monomer solution 2 [part(s) by mass] |
| Raw material monomers | Ionic monomer | Methacrylic acid | - | 76.8 | 19.2 |
| | Hydrophobic monomer | Styrene | 26.4 | 211.2 | 26.4 |
| | | Styrene-based macromer*¹ | 18.0 | 162.0 | - |
| | Nonionic monomer | M-40G*² | 15.0 | 120.0 | 15.0 |
| Organic solvent | | Methyl ethyl ketone | 10.5 | 115.5 | 84.0 |
| Polymerization initiator | | V-65*³ | - | 4.8 | 1.2 |
| Polymerization chain transfer agent | | 2-Mercaptoethanol | 0.08 | 0.59 | 0.17 |

| | | | | | |
|---|---|---|---|---|---|
| Note *1: "AS-6(S)" active ingredient content: 50% by mass; number-average molecular weight: 6000) available from Toagosei Co., Ltd. *2: Methoxy polyethylene glycol monomethacrylate "NK ESTER M-40G" (average molar number of addition of ethyleneoxide: 4) available from Shin-Nakamura Chemical Co., Ltd. *3: 2,2'-Azobis(2,4-dimethylvaleronitrile) available from Wako Pure Chemical Industries, Ltd. | | | | | |

### Production Example 2-1 (Production of Aqueous Dispersion D-1 of Pigment-Containing Polyester Resin Particles)

### (1) Pigment Dispersing Step

In a 2 L-capacity container, 66.7 g of the polyester resin P-1 as the pigment dispersing polymer (Ia) was dissolved in 156.4 g of methyl ethyl ketone (MEK). The resulting polymer solution was mixed with 5.36 g of a 5N sodium hydroxide aqueous solution as a neutralizing agent and 430 g of ion-exchanged water such that the degree of neutralization of the polyester resin P-1 by sodium hydroxide on the basis of an acid value thereof was adjusted to 85 mol%. The resulting reaction solution was stirred and mixed at a temperature of not lower than 10°C and not higher than 15°C using a disper blade operated at 2,000 r/min for 15 minutes.

Then, 100 g of the black pigment was added to the reaction solution, and the resulting mixture was stirred and mixed at a temperature of not lower than 10°C and not higher than 15°C using a disper blade operated at 7,000 r/min for 2 hours. The resulting preliminary dispersion was subjected to filtration treatment through a 150-mesh filter, and then diluted by adding 36.1 g of ion-exchanged water thereto. The obtained diluted dispersion was subjected to dispersion treatment under a pressure of 150 MPa using a Microfluidizer "M-110EH-30XP" (high-pressure homogenizer) available from Microfluidics Corporation by passing the dispersion through the device 15 times, thereby obtaining a dispersion liquid of pigment-containing polyester resin particles.

### (2) Concentration Step

A 2 L eggplant-shaped flask was charged with the whole amount of the resulting dispersion liquid of the pigment-containing polyester resin particles, and then ion-exchanged water was added thereto such that a solid content of the dispersion was adjusted to 16.0%. The resulting dispersion was maintained under a pressure of 0.09 MPa (abs) in a warm water bath adjusted to 32°C for 3 hours using a rotary distillation apparatus "Rotary Evaporator N-1000S" available from Tokyo Rikakikai Co., Ltd., operated at a rotating speed of 50 r/min to remove the organic solvent therefrom. Furthermore, the temperature of the warm water bath was adjusted to 62°C, and the pressure in the apparatus was reduced to 0.07 MPa (abs), and the resulting reaction solution was concentrated under this condition until a solid content of the reaction solution became 25.0%.

The thus obtained concentrated solution was charged into a 500 mL angle rotor, and subjected to centrifugal separation using a high-speed cooling centrifuge "himac CR22G" (temperature set: 20°C) available from Hitachi Koki Co., Ltd., at 3,660 r/min for 20 minutes. Thereafter, the resulting liquid layer portion was subjected to filtration treatment through a membrane filter "Minisart" (having a pore size of 5 µm) available from Sartorius Inc., thereby obtaining an aqueous dispersion 1 of the pigment-containing polyester resin particles.

Then, ion-exchanged water was added to the thus obtained aqueous dispersion 1 such that a solid content of the aqueous dispersion 1 was 22.0%, and 0.76 g of "Ploxel (registered trademark) LV(S)" (mildew-proof agent; active ingredient content: 20%) available from Lonza Japan K.K., was further added thereto, followed by stirring the resulting mixture at 70°C for 2 hours. The obtained reaction solution was cooled to 25°C, and then subjected to filtration treatment through the aforementioned filter with a pore size of 5 µm. Furthermore, the obtained filtered product was mixed with ion-exchanged water, thereby obtaining an aqueous dispersion D-1 of the pigment-containing polyester resin particles (solid content: 22.0%). The average particle size of the pigment-containing polyester resin particles in the thus obtained aqueous dispersion D-1 was 90 nm.

### Production Example 2-2 (Production of Aqueous Dispersion D-2 of Pigment-Containing Vinyl-Based Resin Particles)

### (1) Pigment Dispersing Step

The solution of the vinyl-based resin P-3 (solid content: 40.8%) as the pigment dispersing polymer (Ia) and methyl ethyl ketone (MEK) were mixed with each other in amounts of 157.6 g and 60.7 g, respectively, thereby obtaining an MEK solution of the vinyl-based resin P-3. The resulting MEK solution of the vinyl-based resin P-3 was charged into a 2 L-capacity container, and while stirring the solution at 1,400 r/min using a disper blade, 446.9 g of ion-exchanged water, 22.3 g of a 5N sodium hydroxide aqueous solution and 1.7 g of a 25% ammonia aqueous solution were added thereto such that the degree of neutralization of the vinyl-based resin P-3 by sodium hydroxide on the basis of an acid value thereof was adjusted to 78.8 mol% and the degree of neutralization of the vinyl-based resin P-3 by ammonia on the basis of an acid value thereof was adjusted to 21.2 mol%. The resulting reaction solution was stirred at 1,400 r/min for 15 minutes while cooling the solution in a water bath at 0°C.

Then, 150 g of the black pigment was added to the reaction solution, and the resulting mixture was stirred and mixed at a temperature of not lower than 10°C and not higher than 15°C using a disper blade operated at 7,000 r/min for 3 hours. The resulting preliminary dispersion was mixed with 199.8 g of ion-exchanged water, and then subjected to dispersion treatment under a pressure of 150 MPa using a Microfluidizer "M-110EH-30XP" available from Microfluidics Corporation by passing the dispersion through the device 15 times, thereby obtaining a dispersion liquid of pigment-containing vinyl-based resin particles (solid content: 21.0%).

### (2) Concentration Step

A 2 L eggplant-shaped flask was charged with 1,000 g of the resulting dispersion liquid of the pigment-containing vinyl-based resin particles, and then 400 g of ion-exchanged water was added thereto such that a solid content of the dispersion liquid was 15.0%. The resulting dispersion was maintained under a pressure of 0.09 MPa (abs) in a warm water bath adjusted to 32°C for 3 hours using a rotary distillation apparatus "Rotary Evaporator N-1000S" available from Tokyo Rikakikai Co., Ltd., operated at a rotating speed of 50 r/min to remove the organic solvent therefrom. Furthermore, the temperature of the warm water bath was adjusted to 62°C, and the pressure in the apparatus was reduced to 0.07 MPa (abs), and the resulting reaction solution was concentrated under this condition until a solid content of the reaction solution reached 25.0%.

The thus obtained concentrated solution was charged into a 500 mL angle rotor, and subjected to centrifugal separation using a high-speed cooling centrifuge "himac CR22G" (temperature set: 20°C) available from Hitachi Koki Co., Ltd., at 7,000 r/min for 20 minutes. Thereafter, the resulting liquid layer portion was subjected to filtration treatment through a membrane filter "Minisart" (having a pore size of 5 µm) available from Sartorius Inc., thereby obtaining an aqueous dispersion 2 of the pigment-containing vinyl-based resin particles.

### (3) Crosslinking Step

Then, 400 g of the thus obtained aqueous dispersion 2 (black pigment: 68.6 g; vinyl-based resin P-3: 29.4 g) was mixed with 54.6 g of ion-exchanged water and further mixed with 0.89 g of "Ploxel (registered trademark) LV(S)" (mildew-proof agent; active ingredient content: 20%) available from Lonza Japan K.K., and 2.82 g of an epoxy crosslinking agent "DENACOL (registered trademark) EX-321L" (tradename; trimethylolpropane polyglycidyl ether; epoxy equivalent: 129) available from Nagase ChemteX Corporation was also added to the dispersion such that the amount of a glycidyl group on the basis of a carboxy group derived from methacrylic acid in the vinyl-based resin P-3 was 40 mol% (crosslinking rate: 40 mol%), followed by stirring the resulting mixture at 90°C for 2 hours. The obtained reaction solution was cooled to 25°C, and then subjected to filtration treatment through the aforementioned filter with a pore size of 5 µm. Furthermore, the obtained filtered product was mixed with ion-exchanged water, thereby obtaining an aqueous dispersion D-2 of the pigment-containing vinyl-based resin particles (crosslinking rate: 40 mol%; solid content: 22.0%). The average particle size of the pigment-containing vinyl-based resin particles in the thus obtained aqueous dispersion D-2 was 93.1 nm.

### Production Example 3-1 (Production of Aqueous Dispersion d-1 of Pigment-Free Polyester Resin Particles)

A four-necked flask equipped with a nitrogen inlet tube, a reflux condenser, a stirrer and a thermocouple was charged with the polyester resin P-2 as a fixing aid polymer (Ib) and methyl ethyl ketone (MEK) as an organic solvent in the compounding ratios as shown in Table 3 to dissolve the polyester resin P-2 in MEK at 25°C.

Next, the resulting solution was mixed with a 5N sodium hydroxide aqueous solution as a neutralizing agent, and the resulting mixture was further mixed with deionized water while stirring, thereby obtaining a dispersion liquid of pigment-free polyester resin particles.

While maintaining the resulting dispersion liquid in the four-necked flask at 60°C under stirring, an inside pressure of the flask was reduced to remove MEK therefrom by distillation.

After being cooled to room temperature, the obtained dispersion was mixed with ion-exchanged water, and the resulting mixture was subjected to filtration treatment by passing through a 200-mesh wire screen, thereby obtaining an aqueous dispersion d-1 of the pigment-free polyester resin particles (solid content: 40.0%). Various properties of the thus obtained aqueous dispersion d-1 are shown in Table 3.

**TABLE 3**

| | | Production Example 3-1 |
|---|---|---|
| Aqueous dispersion of pigment-free polyester resin particles | | d-1 |
| Polyester resin | Kind | P-2 |
| | Amount added [g] | 200 |
| Methyl ethyl ketone [g] | | 200 |
| 5N sodium hydroxide aqueous solution [g] | | 13.1 |
| Ion-exchanged water [g] | | 457 |
| Average particle size [nm] | | 115 |

### Production Example 3-2 (Production of Aqueous Dispersion d-2 of Pigment-Free Vinyl-Based Resin Particles)

A 1000 mL-capacity separable flask was charged with 145 parts of methyl methacrylate available from Wako Pure Chemical Industries, Ltd., 50 parts of 2-ethylhexyl acrylate available from Wako Pure Chemical Industries, Ltd., 5 parts of methacrylic acid available from Wako Pure Chemical Industries, Ltd., 18.5 parts of "LATEMUL E-118B" (emulsifier; active ingredient content: 26%) available from Kao Corporation, 96 parts of ion-exchanged water and potassium persulfate available from Wako Pure Chemical Industries, Ltd., and the contents of the flask were stirred using a stirring blade (300 rpm), thereby obtaining a monomer emulsion.

A reaction vessel was charged with 4.6 parts of "LATEMUL E-118B", 186 parts of ion-exchanged water and 0.08 part of potassium persulfate, and an inside atmosphere of the reaction vessel was fully replaced with nitrogen gas. In a nitrogen atmosphere, the contents of the reaction vessel were heated to 80°C while stirring with a stirring blade (200 rpm), and then the aforementioned monomer emulsion was charged into a dropping funnel and added dropwise into the reaction vessel over 3 hours to subject the monomer emulsion to polymerization reaction. The resulting reaction solution was mixed with ion-exchanged water, thereby obtaining an aqueous dispersion d-2 of pigment-free vinyl-based resin particles (solid content: 41.6%) using the vinyl-based resin as the fixing aid polymer (Ib). The average particle size of the pigment-free vinyl-based resin particles in the thus obtained aqueous dispersion d-2 was 100 nm.

### Ink Production Examples 1 and 2

The respective components were mixed with each other according to the formulation shown in the following Table 4, and the resulting mixed solution was subjected to filtration treatment through a membrane filter "Minisart" (having a pore size of 1.2 µm) available from Sartorius Inc., thereby obtaining respective water-based inks X and Y.

**TABLE 4**

| Ink Production Examples | | | 1 | 2 |
|---|---|---|---|---|
| Kind of water-based ink | | | X | Y |
| Formulation of water-based ink*¹ | Aqueous dispersion of pigment-containing polymer particles | D-1 | 30.3 | - |
| | | D-2 | - | 26.0 |
| | Aqueous dispersion of pigment-free polymer particles | d-1 | 12.5 | - |
| | | d-2 | - | 7.2 |
| | Organic solvent | BDG | 5.0 | 5.0 |
| | | PG | 35.0 | 30.0 |
| | Surfactant | KF6011 | 0.5 | 0.5 |
| | pH controller | MDEA | 0.3 | 0.3 |
| | Ion-exchanged water | | 16.4 | 31.0 |

| | | | | |
|---|---|---|---|---|
| Note *1: Amount (% by mass) compounded on the basis of a whole amount of the water-based ink | | | | |

### Examples 1-1 to 1-6 and Comparative Examples 1-1 to 1-4

The respective components were mixed with each other according to the formulation shown in the following Table 5, and the resulting mixed solution was subjected to filtration treatment through a membrane filter "Minisart" (having a pore size of 1.2 µm) available from Sartorius Inc., thereby obtaining aqueous compositions 1 to 10.

The thus obtained aqueous compositions were respectively stored under environmental conditions at a constant temperature of 60°C to measure viscosity of the respective aqueous compositions after the storage. The rate of change in viscosity of the respective aqueous compositions between before and after the storage [= 100 x (viscosity of aqueous composition after storage)/(viscosity of aqueous composition before storage)] was calculated to evaluate storage stability thereof according to the following evaluation ratings. When the evaluation result is A or B, the aqueous composition can exhibit sufficient storage stability. The results are shown in Table 5.

The rate of change in viscosity of the aqueous composition as used herein represents the degree of retention of viscosity before storage of the aqueous composition. More specifically, the rate of change in viscosity of the aqueous composition of 100% indicates that the aqueous composition exhibits no change in its viscosity between before and after the storage.

### (Evaluation Ratings)

A: The rate of change in viscosity of the aqueous composition after being stored for 4 weeks was not less than 90% and not more than 110%.
B: The rate of change in viscosity of the aqueous composition after being stored for 2 weeks was not less than 90% and not more than 110%, but the rate of change in viscosity of the aqueous composition after being stored for more than 2 weeks was less than 90% or more than 110%.
C: The rate of change in viscosity of the aqueous composition after being stored for 1 week was not less than 90% and not more than 110%, but the rate of change in viscosity of the aqueous composition after being stored for more than 1 week was less than 90% or more than 110%.
D: The rate of change in viscosity of the aqueous composition after being stored for less 1 week was less than 90% or more than 110%.

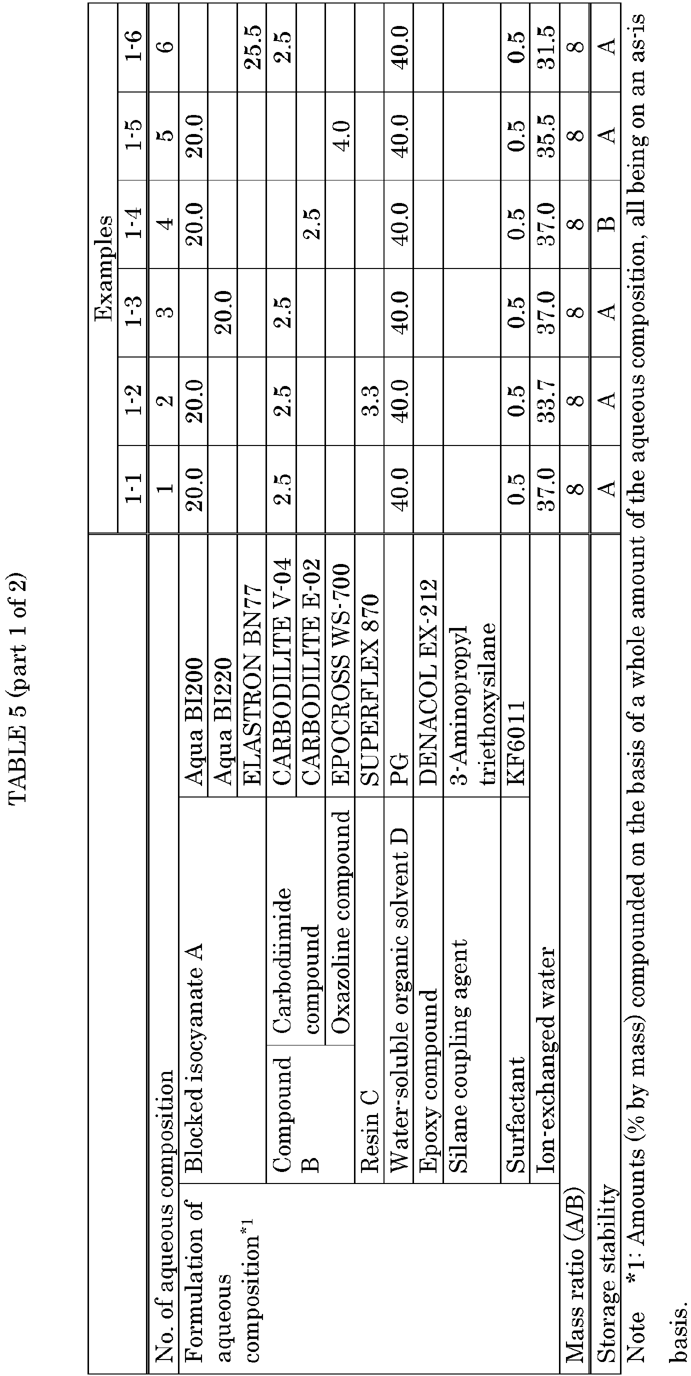

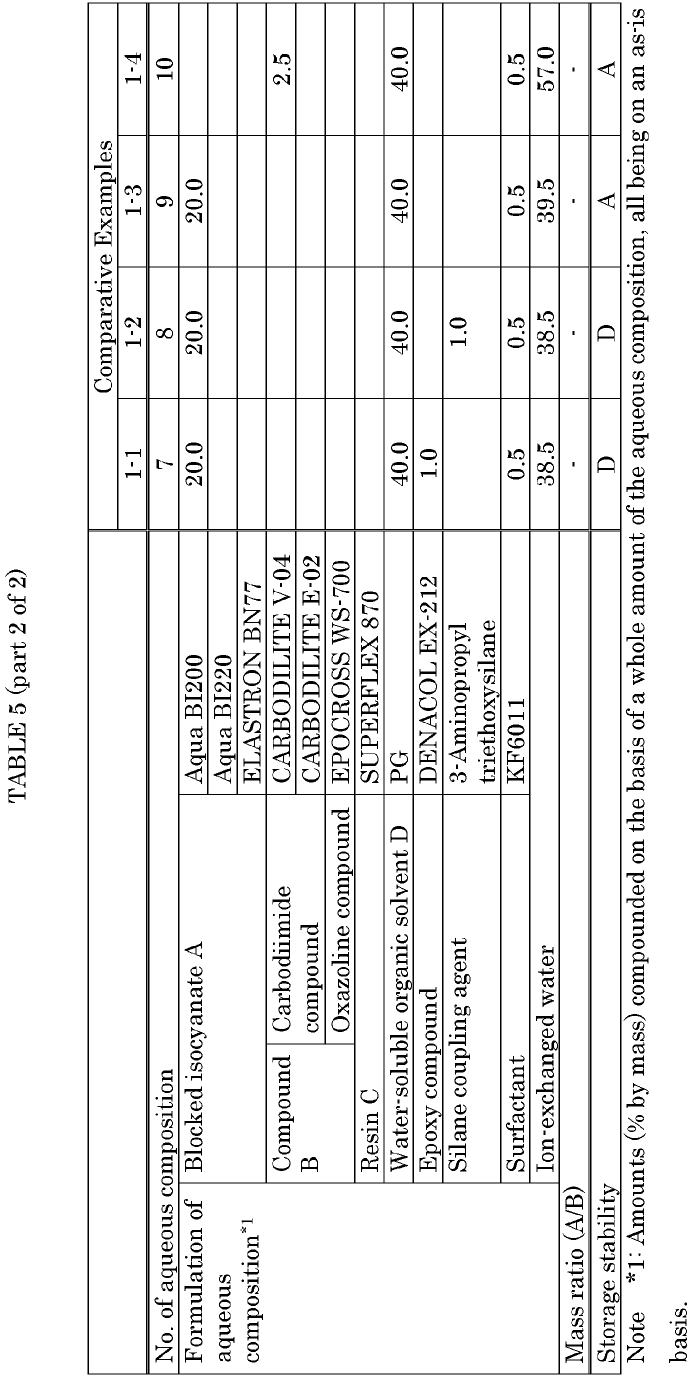

The respective notations shown in Table 5 are as follows.
Aqua BI200: Blocked isocyanate (isocyanate type: HDI trimer; blocking agent: 3,5-dimethyl pyrazole; reaction temperature (dissociation temperature): not lower than 110°C; isocyanate group equivalent: 933; active ingredient content: 40%; solvent: water/NMP; "Trixene blocked isocyanates Aqua BI200" (tradename) available from Baxenden Chemicals Ltd.)
Aqua BI220: Blocked isocyanate (isocyanate type: HDI trimer; blocking agent: 3,5-dimethyl pyrazole; reaction temperature (dissociation temperature): not lower than 110°C; isocyanate group equivalent: 1,000; active ingredient content: 40%; solvent: water/Coasol; "Trixene blocked isocyanates Aqua BI220" (tradename) available from Baxenden Chemicals Ltd.)
ELASTRON BN77: Blocked isocyanate (reaction temperature (dissociation temperature): not lower than 120°C; active ingredient content: 31.4%; available from DKS Co., Ltd.; tradename)
CARBODILITE V-04: Polycarbodiimide compound (appearance: aqueous solution; carbodiimide group equivalent: 335; active ingredient content: 40%; available from Nisshinbo Chemical Inc.; tradename)
CARBODILITE E-02: Polycarbodiimide compound (appearance: emulsion; carbodiimide group equivalent: 445; active ingredient content: 40%; available from Nisshinbo Chemical Inc.; tradename)
EPOCROSS WS-700: Oxazoline group-containing polymer (oxazoline group equivalent: 220; active ingredient content: 25%; available from Nippon Shokubai Co., Ltd.; tradename)
SUPERFLEX 870: Aromatic isocyanate-ester-based polyurethane resin (active ingredient content: 30%; available from DKS Co., Ltd.; tradename)
DENACOL EX-212: 1,6-Hexanediol diglycidyl ether (epoxy equivalent: 151; active ingredient content: 100%; available from Nagase ChemteX Corporation)
3-Aminopropyl triethoxysilane: Silane coupling agent; active ingredient content: 100%; available from Shin-Etsu Chemical Co., Ltd.

### Examples 2-1 to 2-9 and Comparative Examples 2-1 to 2-4

Using an ink set constituted of a combination of the aqueous composition and the water-based ink as shown in Table 6 below, printing was conducted using "LUMIRROR (registered trademark) T60" (polyethylene terephthalate (PET) film; water absorption: 2.3 g/cm²) available from Toray Industries, Inc., and "SPACECLEAN (registered trademark) S7042" (shrink PET film; heat shrinkage rate (90°C, 10 seconds): 60%; water absorption: not more than 10 g/cm²) available from TOYOBO Co., Ltd., as a printing medium, by the following method to obtain printed materials. The thus obtained respective printed materials were subjected to the following evaluation procedures. The results are also shown in Table 6.

The water-based ink and the aqueous composition were loaded to a print evaluation apparatus equipped with an ink-jet print head "KJ4B-YH" (product name; piezoelectric type) available from Kyocera Corporation, and an under heater for heating the printing medium from a rear side surface of the printing medium which was opposed to a front side surface thereof which faced to the ink-jet print head.

The distance between the under heater and the printing medium was set to 0.2 mm, and the distance between the ink-jet print head and the printing medium was set to 2.0 mm, and further the surface temperature of the under heater was adjusted to 40°C.

The printing operation was conducted under the environmental conditions of a temperature of 25±1°C and a relative humidity of 30±5%. The operating conditions of the print evaluation apparatus were set to a head applied voltage of 26 V, a head drive frequency of 10 kHz, an ejected ink droplet amount of 7 pL, a head temperature of 32°C, a head resolution of 600 dpi, the number of ink shots for flushing before being ejected of 200 shots and a negative pressure of -4.0 kPa, and the printing medium was fixedly held in the print evaluation apparatus such that the longitudinal direction of the printing medium was aligned with a transportation direction thereof.

A printing command was transmitted to the aforementioned print evaluation apparatus to successively eject the water-based ink and the aqueous composition in this order and print solid images of the water-based ink and the aqueous composition at the same position of the printing medium such that the water-based ink and the aqueous composition were mixed with each other on the printing medium, thereby obtaining the printed solid images (step 1).

Incidentally, the amount of the aqueous composition applied onto the printing medium was about 1.6 g per 1 m² of the 100%-density solid image in terms of a solid content thereof, and the amount of the water-based ink applied onto the printing medium was about 2.3 g per 1 m² of the 100%-density solid image in terms of a solid content thereof.

Next, the thus printed solid images on the printing medium were dried by a hot air dryer at 50°C for 3 minutes (step 2-1), and then dried by a hot air dryer at 120°C for 10 minutes (step 2-2) to subject the components contained in the solid images to crosslinking reaction, thereby obtaining a printed material (step 2).

### [Evaluation]

### [Rub Fastness]

The printed surface of the resulting printed material was rubbed with a cellulose nonwoven fabric "BEMCOT (registered trademark) M3-II" available from Asahi Kasei Fibers Corporation, underlaid beneath a bottom surface of a weight of 700 g (bottom surface area: 4 cm²) by reciprocatively moving the nonwoven fabric with the weight over the printed surface 100 times while applying a load of 700 g of the weight thereonto.

The damage (flaws) on the printed surface was visually observed while rubbing to evaluate rub fastness thereof according to the following evaluation ratings. When the evaluation result was A or B, the printed material was sufficient in rub fastness.

### (Evaluation Ratings)

A: Occurrence of neither flaws nor peeling was recognized on the printed surface even after being reciprocatively rubbed 100 times.
B: Occurrence of flaws or peeling was recognized on the printed surface after being reciprocatively rubbed not less than 50 and not more than 99 times.
C: Occurrence of flaws or peeling was recognized on the printed surface after being reciprocatively rubbed not less than 21 and not more than 49 times.
D: Occurrence of flaws or peeling was recognized on the printed surface after being reciprocatively rubbed not more than 20 times.

### [Solvent Resistance]

A hand skish alcohol disinfectant (alcohol concentration: 79%) available from Kao Corporation was impregnated into a cotton swab "Johnson's cotton buds" available from Johnson & Johnson K.K., and the printed surface of the resulting printed material was rubbed with the cotton swab by reciprocatively moving the cotton swab over the printed surface 30 times while applying a load of 5 g thereto. The printed surface was visually observed while rubbing to evaluate solvent resistance (resistance to ethanol) thereof according to the following evaluation ratings. When the evaluation result was A or B, the printed material was sufficient in solvent resistance.

### (Evaluation Ratings)

A: No decoloring was recognized on the printed surface even after being reciprocatively rubbed 30 times.
B: Decoloring was recognized on the printed surface after being reciprocatively rubbed not less than 11 and not more than 29 times.
C: Decoloring was recognized on the printed surface after being reciprocatively rubbed not less than 4 and not more than 10 times.
D: Decoloring was recognized on the printed surface after being reciprocatively rubbed not more than 3 times.

### [Substrate Adhesion Properties]

A cellophane tape available from Nichiban Co., Ltd., was attached onto a printed surface of the resulting printed material such that no air bubbles were trapped beneath the tape. After allowing the cellophane tape thus attached to stand for 2 minutes, the cellophane tape was peeled off from the printed surface while maintaining a peeling angle of 90° relative to the printed surface.

The printed surface of the printed material after peeing off the cellophane tape therefrom was visually observed to determine whether or not any damage (flaws) occurred thereon and evaluate substrate adhesion properties according to the following evaluation ratings. When the evaluation result was A or B, the printed material was sufficient in substrate adhesion properties.

### (Evaluation Ratings)

A: One hundred percent (100%) of a whole image region of the printed surface portion to which the cellophane tape was attached still remained unpeeled after the peel test.
B: Not less than 90% and less than 100% of a whole image region of the printed surface portion to which the cellophane tape was attached remained unpeeled after the peel test.
C: Not less than 10% and less than 90% of a whole image region of the printed surface portion to which the cellophane tape was attached remained unpeeled after the peel test.
D: Less than 10% of a whole image region of the printed surface portion to which the cellophane tape was attached remained unpeeled after the peel test.

**TABLE 6**

| | | Ink set | | Printing medium | | | | | |
|---|---|---|---|---|---|---|---|---|---|
| | | No. of aqueous composition | No. of ink | LUMIRROR (PET film) | | | SPACECLEAN (Shrink PET film) | | |
| | | | | Rub fastness | Solvent resistance | Substrate adhesion properties | Rub fastness | Solvent resistance | Substrate adhesion properties |
| Examples | 2-1 | 1 | X | A | A | A | A | A | A |
| | 2-2 | 1 | Y | A | B | B | A | B | B |
| | 2-3 | 2 | X | A | A | A | A | B | A |
| | 2-4 | 2 | Y | A | B | B | A | B | B |
| | 2-5 | 3 | X | A | B | A | A | B | A |
| | 2-6 | 3 | Y | A | B | B | A | B | B |
| | 2-7 | 4 | X | A | A | A | A | A | A |
| | 2-8 | 5 | X | A | B | A | A | B | A |
| | 2-9 | 6 | X | B | A | A | B | B | B |
| Comparative Examples | 2-1 | 9 | X | A | C | A | C | C | A |
| | 2-2 | 9 | Y | A | D | B | C | D | B |
| | 2-3 | 10 | X | D | A | A | D | C | B |
| | 2-4 | 10 | Y | C | C | B | C | D | C |

From the results of the Examples and Comparative Examples shown in Table 5, it was confirmed that by using the blocked isocyanate A in combination with the compound B which was selected from any of the carbodiimide compound and the oxazoline compound, it was possible to obtain the aqueous composition that was excellent in storage stability.

From the results of the Examples and Comparative Examples shown in Table 6, it was confirmed that by using the respective aqueous compositions obtained in the Examples in combination with the water-based ink, the resulting printed materials were excellent in rub fastness, solvent resistance and substrate adhesion properties. On the other hand, it was confirmed that the respective aqueous compositions obtained in the Comparative Examples were deteriorated in any of rub fastness, solvent resistance and substrate adhesion properties, and therefore the properties thereof were ill-balanced.

### Industrial Applicability

The aqueous composition of the present invention is excellent in storage stability. In the ink set containing the aqueous composition and the water-based ink as well as the ink-jet printing method using the aqueous composition and the water-based ink according to the present invention, it is possible to obtain a printed material that is excellent in rub fastness, solvent resistance and substrate adhesion properties even when printed on a non-water absorbing printing medium or a shrinkable printing medium.

## Claims

1. An aqueous composition for ink-jet printing, comprising a blocked isocyanate A, at least one compound B selected from the group consisting of a carbodiimide compound and an oxazoline compound, and water, **characterized in that** the mass ratio of the blocked isocyanate A to the compound B (A/B) is not less than 3 and not more than 15.

2. The aqueous composition for ink-jet printing according to claim 1, wherein a dissociation temperature of the blocked isocyanate A is not lower than 100°C and not higher than 200°C.

3. The aqueous composition for ink-jet printing according to claim 1 or 2, wherein an equivalent amount of an isocyanate group of the blocked isocyanate A is not less than 300 and not more than 4,000.

4. The aqueous composition for ink-jet printing according to any one of claims 1 to 3, wherein the blocked isocyanate A is formed by blocking isocyanate groups of a polyisocyanate compound with a blocking agent, and wherein the blocking agent is at least one compound selected from the group consisting of 3,5-dimethyl pyrazole, 1,2,4-triazole, diisopropyl amine, phenol, cresol, methyl ethyl ketoxime, ε-caprolactam, diethyl malonate, and ethyl acetoacetate

5. The aqueous composition for ink-jet printing according to any one of claims 1 to 4, further comprising a resin comprising a reactive group that is capable of undergoing a crosslinking reaction at least with the compound B.

6. The aqueous composition for ink-jet printing according to any one of claims 1 to 5, further comprising a water-soluble organic solvent D which comprises a diol having not less than 3 and not more than 6 carbon atoms.

7. A coating liquid for ink-jet printing, comprising the aqueous composition for ink-jet printing according to any one of claims 1 to 6.

8. An ink set for ink-jet printing, comprising the aqueous composition for ink-jet printing according to any one of claims 1 to 6, and a water-based ink comprising a pigment,
in which at least one of the aqueous composition for ink-jet printing and the water-based ink comprises the resin comprising a reactive group that is capable of undergoing a crosslinking reaction at least with the compound B.

9. The ink set for ink-jet printing according to claim 8, wherein the water-based ink comprises pigment-containing water-insoluble polymer particles.

10. The ink set for ink-jet printing according to claim 9, wherein a polymer constituting the pigment-containing water-insoluble polymer particles is a polyester resin.

11. The ink set for ink-jet printing according to any one of claims 8 to 10, wherein the water-based ink comprises a fixing aid polymer (Ib).

12. The ink set for ink-jet printing according to claim 11, wherein the fixing aid polymer (Ib) is a polyester resin.

13. An ink-jet printing method using the aqueous composition for ink-jet printing according to any one of claims 1 to 6, and a water-based ink comprising a pigment, in which at least one of the aqueous composition for ink-jet printing and the water-based ink comprises the resin comprising a reactive group that is capable of undergoing a crosslinking reaction at least with the compound B,
said ink-jet printing method comprising the following steps 1 and 2:
Step 1: ejecting the aqueous composition for ink-jet printing and the water-based ink onto a surface of a printing medium by an ink-jetting method to print characters or images thereon; and
Step 2: subjecting the blocked isocyanate A, the compound B and the resin which are present in the characters or images printed in the step 1 to crosslinking reaction.

14. A use of the aqueous composition for ink-jet printing according to any one of claims 1 to 6 as a composition for improving fixing properties of an ink for ink-jet printing.

15. A use of the ink set for ink-jet printing according to any one of claims 8 to 12 for ink-jet printing.

## Patentansprüche

1. Eine wässrige Zusammensetzung für den Tintenstrahldruck, umfassend ein blockiertes Isocyanat A, mindestens eine Verbindung B, ausgewählt aus der Gruppe bestehend aus einer Carbodiimidverbindung und einer Oxazolinverbindung, und Wasser, **dadurch gekennzeichnet, dass** das Massenverhältnis des blockierten Isocyanats A zu der Verbindung B (A/B) nicht weniger als 3 und nicht mehr als 15 beträgt.

2. Wässrige Zusammensetzung für den Tintenstrahldruck gemäß Anspruch 1, wobei eine Dissoziationstemperatur des blockierten Isocyanats A nicht niedriger als 100°C und nicht höher als 200°C ist.

3. Wässrige Zusammensetzung für den Tintenstrahldruck gemäß Anspruch 1 oder 2, wobei eine Äquivalentmenge einer Isocyanatgruppe des blockierten Isocyanats A nicht weniger als 300 und nicht mehr als 4.000 beträgt.

4. Wässrige Zusammensetzung für den Tintenstrahldruck gemäß einem der Ansprüche 1 bis 3, wobei das blockierte Isocyanat A durch Blockieren von Isocyanatgruppen einer Polyisocyanatverbindung mit einem Blockiermittel gebildet wird, wobei das Blockiermittel mindestens eine Verbindung, ausgewählt aus der Gruppe bestehend aus 3,5-Dimethylpyrazol, 1,2,4-Triazol, Diisopropylamin, Phenol, Kresol, Methylethylketoxim, ε-Caprolactam, Diethylmalonat und Ethylacetoacetat ist.

5. Wässrige Zusammensetzung für den Tintenstrahldruck gemäß einem der Ansprüche 1 bis 4, ferner umfassend ein Harz, das eine reaktive Gruppe umfasst, die in der Lage ist, mindestens mit der Verbindung B eine Quervernetzungsreaktion einzugehen.

6. Wässrige Zusammensetzung für den Tintenstrahldruck gemäß einem der Ansprüche 1 bis 5, ferner umfassend ein wasserlösliches organisches Lösungsmittel D, das ein Diol mit nicht weniger als 3 und nicht mehr als 6 Kohlenstoffatomen umfasst.

7. Beschichtungsflüssigkeit für den Tintenstrahldruck, umfassend die wässrige Zusammensetzung für den Tintenstrahldruck gemäß einem der Ansprüche 1 bis 6.

8. Tintenset für den Tintenstrahldruck, umfassend die wässrige Zusammensetzung für den Tintenstrahldruck gemäß einem der Ansprüche 1 bis 6, und eine Tinte auf Wasserbasis, die ein Pigment umfasst,
wobei mindestens eine der wässrigen Zusammensetzung für den Tintenstrahldruck und der Tinte auf Wasserbasis das Harz umfasst, das eine reaktive Gruppe umfasst, die in der Lage ist, mindestens mit der Verbindung B eine Quervernetzungsreaktion einzugehen.

9. Tintenset für den Tintenstrahldruck gemäß Anspruch 8, wobei die Tinte auf Wasserbasis pigmenthaltige, wasserunlösliche Polymerpartikel umfasst.

10. Tintenset für den Tintenstrahldruck gemäß Anspruch 9, wobei ein Polymer, das die pigmenthaltigen, wasserunlöslichen Polymerteilchen bildet, ein Polyesterharz ist.

11. Tintenset für den Tintenstrahldruck gemäß einem der Ansprüche 8 bis 10, wobei die Tinte auf Wasserbasis ein Fixierhilfepolymer (Ib) enthält.

12. Tintenset für den Tintenstrahldruck gemäß Anspruch 11, wobei das Fixierhilfepolymer (Ib) ein Polyesterharz ist.

13. Tintenstrahldruckverfahren, welches die wässrige Zusammensetzung für den Tintenstrahldruck gemäß einem der Ansprüche 1 bis 6 und eine Tinte auf Wasserbasis, die ein Pigment umfasst, verwendet, wobei mindestens eine der wässrigen Zusammensetzung für den Tintenstrahldruck und der Tinte auf Wasserbasis das Harz umfasst, das eine reaktive Gruppe umfasst, die in der Lage ist, mindestens mit der Verbindung B eine Quervernetzungsreaktion einzugehen,
wobei das Tintenstrahldruckverfahren die folgenden Schritte 1 und 2 umfasst:
Schritt 1: Aufbringen der wässrigen Zusammensetzung für den Tintenstrahldruck und der Tinte auf Wasserbasis auf eine Oberfläche eines Druckmediums durch ein Tintenstrahlverfahren, um Zeichen oder Bilder darauf zu drucken; und
Schritt 2: Unterziehen des blockierten Isocyanats A, der Verbindung B und des Harzes, welche in den in Schritt 1 gedruckten Zeichen oder Bildern vorhanden sind, einer Quervernetzungsreaktion.

14. Verwendung der wässrigen Zusammensetzung für den Tintenstrahldruck gemäß einem der Ansprüche 1 bis 6 als eine Zusammensetzung zur Verbesserung der Fixiereigenschaften einer Tinte für den Tintenstrahldruck.

15. Verwendung des Tintensets für den Tintenstrahldruck gemäß einem der Ansprüche 8 bis 12 für den Tintenstrahldruck.

## Revendications

1. Composition aqueuse pour impression à jet d'encre, comprenant un isocyanate bloqué A, au moins un composé B choisi dans le groupe constitué d'un composé carbodiimide et d'un composé oxazoline, et de l'eau, **caractérisée en ce que** le rapport massique de l'isocyanate bloqué A au composé B (A/B) est non inférieur à 3 et non supérieur à 15.

2. Composition aqueuse pour impression à jet d'encre selon la revendication 1, dans laquelle une température de dissociation de l'isocyanate bloqué A n'est pas inférieure à 100 °C et pas supérieure à 200 °C.

3. Composition aqueuse pour impression à jet d'encre selon la revendication 1 ou la revendication 2, dans laquelle une quantité équivalente d'un groupe isocyanate de l'isocyanate bloqué A est non inférieure à 300 et non supérieure à 4 000.

4. Composition aqueuse pour impression à jet d'encre selon l'une quelconque des revendications 1 à 3, dans laquelle l'isocyanate bloqué A est formé en bloquant des groupes isocyanate d'un composé polyisocyanate avec un agent bloquant, et dans laquelle l'agent bloquant est au moins un composé choisi dans le groupe constitué du 3,5-diméthyl pyrazole, du 1,2,4-triazole, de la diisopropyl amine, du phénol, du crésol, du méthyl éthyl cétoxime, de l'ε-caprolactame, du malonate de diéthyle, et de l'acétoacétate d'éthyle.

5. Composition aqueuse pour impression à jet d'encre selon l'une quelconque des revendications 1 à 4, comprenant en outre une résine comprenant un groupe réactif qui est capable de subir une réaction de réticulation au moins avec le composé B.

6. Composition aqueuse pour impression à jet d'encre selon l'une quelconque des revendications 1 à 5, comprenant en outre un solvant organique soluble dans l'eau D qui comprend un diol ne comportant pas moins de 3 et pas plus de 6 atomes de carbone.

7. Liquide de revêtement pour impression à jet d'encre, comprenant la composition aqueuse pour impression à jet d'encre selon l'une quelconque des revendications 1 à 6.

8. Ensemble d'encres pour impression à jet d'encre, comprenant la composition aqueuse pour impression à jet d'encre selon l'une quelconque des revendications 1 à 6, et une encre à base d'eau comprenant un pigment,
dans lequel au moins une parmi la composition aqueuse pour impression à jet d'encre et l'encre à base d'eau comprend la résine comprenant un groupe réactif qui est capable de subir une réaction de réticulation au moins avec le composé B.

9. Ensemble d'encres pour impression à jet d'encre selon la revendication 8, dans lequel l'encre à base d'eau comprend des particules de polymère insoluble dans l'eau contenant un pigment.

10. Ensemble d'encres pour impression à jet d'encre selon la revendication 9, dans lequel un polymère constituant les particules de polymère insoluble dans l'eau contenant un pigment est une résine de polyester.

11. Ensemble d'encres pour impression à jet d'encre selon l'une quelconque des revendications 8 à 10, dans lequel l'encre à base d'eau comprend un polymère d'aide à la fixation (Ib).

12. Ensemble d'encres pour impression à jet d'encre selon la revendication 11, dans lequel le polymère d'aide à la fixation (Ib) est une résine de polyester.

13. Procédé d'impression à jet d'encre utilisant la composition aqueuse pour impression à jet d'encre selon l'une quelconque des revendications 1 à 6, et une encre à base d'eau comprenant un pigment, dans lequel au moins une parmi la composition aqueuse pour impression à jet d'encre et l'encre à base d'eau comprend la résine comprenant un groupe réactif qui est capable de subir une réaction de réticulation au moins avec le composé B,
ledit procédé d'impression à jet d'encre comprenant les étapes 1 et 2 suivantes :
Étape 1 : éjection de la composition aqueuse pour impression à jet d'encre et de l'encre à base d'eau sur une surface d'un support d'impression par un procédé de projection d'encre pour imprimer des caractères ou des images sur celle-ci ; et
Étape 2 : soumission de l'isocyanate bloqué A, du composé B et de la résine qui sont présents dans les caractères ou les images imprimés à l'étape 1 à une réaction de réticulation.

14. Utilisation de la composition aqueuse pour impression à jet d'encre selon l'une quelconque des revendications 1 à 6 en tant que composition pour améliorer les propriétés de fixation d'une encre pour impression à jet d'encre.

15. Utilisation de l'ensemble d'encres pour impression à jet d'encre selon l'une quelconque des revendications 8 à 12 pour une impression à jet d'encre.
